(19) Europäisches Patentamt
European Patent Office
Office européen des brevets

(11) **EP 4 712 174 A1**

(12) # EUROPEAN PATENT APPLICATION

(43) Date of publication:
**18.03.2026 Bulletin 2026/12**

(21) Application number: **25202174.6**

(22) Date of filing: **15.09.2025**

(51) International Patent Classification (IPC):
***H01M 8/023*** *(2016.01)* ***H01M 8/0258*** *(2016.01)*
***H01M 8/18*** *(2006.01)*

(52) Cooperative Patent Classification (CPC):
**H01M 8/186; H01M 8/023; H01M 8/0258;**
**H01M 8/188;** H01M 2300/0002

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **13.09.2024 GB 202413547**

(71) Applicants:
- **Services Pétroliers Schlumberger**
  **75007 Paris (FR)**
  Designated Contracting States:
  **FR**
- **Schlumberger Technology B.V.**
  **2514 JG The Hague (NL)**
  Designated Contracting States:
  **AL AT BE BG CH CY CZ DE DK EE ES FI GB GR HR HU IE IS IT LI LT LU LV MC ME MK MT NL NO PL PT RO RS SE SI SK SM TR**

(72) Inventors:
- **COLBOURNE, Adam**
  **Cambridge, CB3 0EL (GB)**
- **GARCIA, Javier Rubio**
  **Cambridge, CB3 0EL (GB)**
- **CLARKE, Andrew**
  **Cambridge, CB3 0EL (GB)**
- **SNOSWELL, David**
  **Cambridge, CB3 0EL (GB)**

(74) Representative: **Schlumberger Intellectual Property Department**
**Parkstraat 83**
**2514 JG Den Haag (NL)**

(54) **FLUID ADDITIVES FOR REGENERATIVE FUEL CELLS**

(57) A regenerative fuel cell has one half-cell which produces gas while charging and consumes the gas during discharge. The electrolyte liquid circulated through that half-cell contains a flexible long chain polymer or a viscoelastic surfactant. The half-cell is configured to compel the flow of electrolyte liquid to make repeated changes in direction and the flow rate is sufficient that elastic turbulence occurs. This dislodges bubbles of produced gas from the electrodes, maintaining more electrode surface available for reaction and enhancing efficiency. The other half-cell may also be in a state of elastic turbulence enhancing mass transport to and from its electrode surface

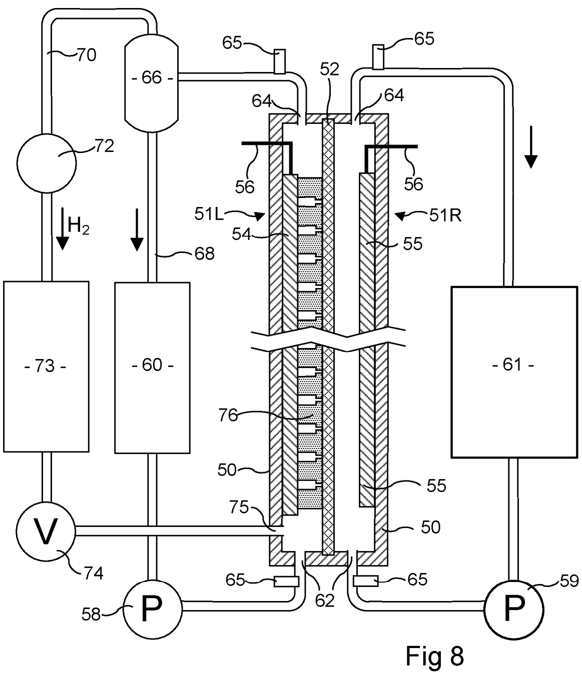

Fig 8

EP 4 712 174 A1

## Description

FIELD

This disclosure relates to regenerative fuel cells having two electrochemical half-cells. One half-cell produces a gas while the cell is charging and consumes that gas during discharge.

BACKGROUND

There are a number of ways in which energy, generated as electrical power, can be stored. Possibilities include a wide range of battery systems. Flow batteries normally consist of two electrochemical half-cells separated by a membrane which separates the liquids of the two half-cells but which does allow passage of ions which are required to cross from one half-cell to the other. During charge and discharge, in each half-cell, a liquid containing one or more species which undergo electrochemical reaction is pumped through the half-cell from an associated storage vessel and after passing through the half-cell, is either discharged to another storage vessel or circulated back to the vessel it came from. Flow batteries typically have the characteristic that the storage capacity for electrical energy is not determined by the size of the electrochemical cell but by the amount of liquid which is held in the storage vessels.

The term "fuel cell" has been used for electrochemical cells in which a substance, which is not a salt, such as hydrogen or methanol is consumed as fuel and electrical power is generated. A regenerative fuel cell is an electrochemical system which stores energy, supplied to it as electrical power, by producing something, possibly a gas, which is subsequently consumed as a fuel to generate electrical power. The overall function is similar to that of a battery and it is convenient to refer to charging and recharging the fuel cell. Because of the similarity in function, terminology in this area is not always consistent. Some documents have used the term "flow battery" to refer to systems in which a half-cell produces and consumes a gas.

One possibility is that hydrogen is produced in one half-cell and oxygen in the other half-cell, and these gases are then converted back to water during discharge. Such an arrangement has been disclosed in US patent 3507704. Another possibility is that a gas is formed in one half-cell during charge while reaction in the other half-cell changes the oxidation state of a reactant which remains in solution. US patent 10756377 describes an example of such a system: hydrogen is produced in one half-cell and metal ions undergo a change in oxidation state in the other half-cell. In another such system, described by Shi et al in "Energizing Fuel Cells with an Electrically Rechargeable Liquid Fuel" Cell Reports Physical Science vol 1, 100102 (2020) one half-cell produces oxygen gas during charge while metal ions undergo a change in oxidation state in the other half-cell.

Current density, the ratio of electrical current to electrode area is a significant measure of efficiency of an electrochemical half-cell and electrodes are frequently formed of a porous or otherwise structured material to enhance the surface area available for contact with liquid. However, in a system where there is liquid flow, as the surface area of an electrode is increased within a constant outline size, the permeability of the electrode typically decreases, causing a higher pressure-drop across the electrode and requiring more energy to be consumed for liquid circulation. There has to be a compromise between the conflicting requirements of high surface area and low pressure drop as the fluid flows over or through the electrode.

A considerable body of work exists in the creation of structured carbon electrodes for flowing electrical cells. Commonly applied high-surface area materials include felts, cloths and papers of polymer (synthetic and natural) fibres. These structures are variously woven, precipitated from solution, electro-spun or otherwise made into a porous matrix with a high surface area, before being converted primarily to carbon through "carbonization" in which the majority of non-carbon elements present in an organic material (e.g. H, O and N) are removed, typically at high temperatures under a non-reactive atmosphere.

Designs which use a high surface area porous material can be classified as either "flow through" type in which there is an inlet to the porous material in one place and an outlet from it in another place or "flow-past" type in which the fluid flows across an outer surface of a body of porous material (which may be a thin body) and at least some of the fluid flow diffuses into the porous matrix. A flow-past design may have the advantage of a relatively low resistance to flow, with a largely even distribution of fluid when it is delivered to the porous electrode. However, this comes at the cost of relying on diffusive transport in the direction perpendicular to the channel, and within the porous electrode to facilitate the movement of electroactive species from the channel, to and from the electrode. Electrodes which are entirely flow-through or entirely flow-past represent extremes. There are many flow field designs which are in between.

When gas is formed from liquid in an electrochemical half-cell, and bubbles of the gas begin to form on the solid surface where the gas is first formed. Interfacial tension causes the very small bubbles to adhere to the solid surface. Coalescence of adjacent bubbles makes the bubbles grow larger but they remain on the surface until they reach a size at which their buoyancy overcomes the adhesion to the solid surface.

While the bubbles are adhering to the solid surface, they are masking an area of that surface, making this

unavailable for the electrochemical reaction. This reduction of the available area reduces the amount of electric current which can flow. The overall current density is reduced. This is a well-known problem with the electrolytic manufacture of hydrogen and oxygen from water, as for instance discussed by Sweigers et al in Sustainable Energy and Fuels vol 5 page 1280 (2021).

Use of a porous material as an electrode or as part of an electrode assembly may exacerbate this issue in that capillary effects (which arise from interfacial tension), in the small channels through a porous material can considerably impede the movement of gas bubbles, so that masking by bubbles and consequent reduction of surface area available for reaction becomes even more significant.

## SUMMARY OF THE DISCLOSURE

This summary is provided to introduce concepts that will be further elaborated and described below in the detailed description. This summary is not intended to identify key or essential features of the claimed subject matter, nor is it intended to be used as an aid in limiting the scope of the claimed subject matter.

The present invention uses the phenomenon of elastic turbulence in a regenerative fuel cell. This has several benefits. Elastic turbulence is an instability of flow which gives rise to pressure fluctuations within the flowing liquid. We have now found that such pressure fluctuations can displace bubbles from an electrode surface before they have grown to a size at which buoyancy overcomes the interfacial tension holding them to the surface. This release of smaller bubbles increases the electrode surface area which is available for reaction, enabling a greater rate of reaction and improved efficiency of the half-cell. In a half-cell where a dissolved chemical species undergoes an electrochemical reaction at an at an electrode surface, elastic turbulence enhances mass transport of the reactive species to the electrode surface and transport of the reaction products away from the surface. This improvement of mass transport can increase the electrical current density (current per unit area) at the electrode and/or reduce overpotential which is required to bring about the transport of reactive species to the electrode surface at a particular rate. Also, in a flow-by electrode design, elastic turbulence in a channel adjoining a porous electrode will increase the pressure drop along the channel and this will cause more liquid to enter the porous electrode.

One aspect of the present disclosure provides a regenerative fuel cell comprising first and second electrochemical systems, each including an electrochemical half-cell and having a selectively permeable separator between the half-cells, where

each of the electrochemical systems comprises an electrochemical half-cell adjacent to the separator and containing an electrode, a liquid able to undergo reaction at the electrode or electrode assembly, and structure defining a liquid flow path carrying flow of the liquid into contact with the electrode, and

each of the electrochemical systems further comprises a storage vessel for the liquid and a pump connected to the storage vessel to circulate a flow of liquid from the storage vessel to the half-cell, along the liquid flow path through the half-cell so as to contact the electrode, and from the half-cell back to the storage vessel,

wherein, when electrical power is supplied to the fuel cell, the liquid of the first electrochemical system is able to form a gas by reaction at the electrode of the first half-cell, and during discharge of electrical power from the fuel cell, the gas is consumed by reaction at the electrode of the first half-cell, and in accordance with the present disclosure the liquid of the first half-cell contains a solute enabling the liquid to display elastic turbulence, and the liquid flow path to the electrode of the first half-cell is configured to compel changes in the direction of liquid flow so as to cause elastic turbulence within flow of the liquid in contact with the electrode.

The fuel cell may then be operated with pumping power sufficient that flow within the half-cell is in a state of elastic turbulence while flow to the half-cell is laminar. As mentioned above, we have found that elastic turbulence in the half-cell while gas is being produced accelerates the separation of gas bubbles from the electrode, thereby keeping more of the electrode area available for reaction and enhancing the efficiency of the fuel cell during charge.

Electrochemical reaction in the second half-cell may be a reaction which does not involve production and consumption of gas. The liquid of the second system may also contain a solute enabling the liquid to display elastic turbulence while the liquid flow path to the electrode or electrode assembly of the second half-cell is configured to compel changes in the direction of liquid flow so as to cause elastic turbulence within flow of the liquid in contact with the electrode or electrode assembly.

A solute enabling a liquid to display elastic turbulence may be a linear polymer with a molecular weight of at least $10^6$ Daltons or may be a viscoelastic surfactant which forms worm-like micelles in the liquid.

A liquid flow path may comprise a porous material whose internal structure compels flow along the flow path to make a succession of changes of direction or may comprise a flow guide which comprises a spaced array of obstructions positioned to compel flow along the flow path to make a succession of changes of direction.

In some embodiments the electrode in the first half-cell may comprise an electrically conductive porous layer

which is located adjacent to the separator and may carry one or more catalysts for the production and consumption of the gas. Such an electrode may be one component of an electrode assembly which also comprises a metallic carrier for electric current Fig 6 is and an electrically conductive second porous layer which is located between the current carrier and the first porous layer.

BRIEF DESCRIPTION OF THE DRAWINGS

Many of the drawings are diagrammatic and are intended to show component parts in relation to each other. Thin components such as membranes are shown with exaggerated thickness to make them and their positions more readily seen.

Fig 1 is a plot of experimental results showing onset of elastic turbulence.

Fig 2 is a perspective view of a flow guide.

Fig 3 is an enlarged top view of a portion of the flow guide.

Fig 4 is a diagram of apparatus for observing elastic turbulence by means of birefringence.

Fig 5 shows, in greyscale, pictures obtained with the apparatus of Fig 4.

Fig 6 is a slightly enlarged cross section of the flow chamber shown in Fig 4, fitted with electrodes.

Figs 7A and 7B show pictures obtained with the apparatus of Figs 4 and 6.

Fig 8 is a schematic view of a regenerative fuel cell.

Fig 9 is a top view onto part of the flow guide used in Fig 8.

Fig 10 is a top view onto part of another flow guide, having pillars with a different cross section.

Figs 11 to 14 show other possible arrangements within the half-cells of the regenerative fuel cell of Fig 8.

Fig 15 is a schematic view of another regenerative fuel cell.

Fig 16 is a schematic view of showing four pairs of half-cells in a single regenerative system.

Fig 17 is a diagrammatic view of apparatus to determine operating parameters for an electrochemical half-cell.

Figs 18 and 19 show experimental results obtained with one example of such apparatus.

DETAILED DESCRIPTION

This detailed description shows various embodiments of the present disclosure and possibilities which may be used. It should be appreciated that features or possibilities described in combination may, where it is practical to do so, be used separately. Also, features or possibilities described in any embodiment may be used in any other embodiment, in so far as it is possible to do so.

The present disclosure uses the phenomenon of elastic turbulence. It is of course well known that Newtonian liquids such as pure water can undergo either laminar flow or turbulent flow. Such turbulent flow may be referred to as inertial turbulence. Conditions for laminar flow and inertial turbulent flow are often expressed by Reynolds number which is a ratio of inertial to viscous forces within a liquid. Reynolds number has no dimensions because it is a ratio. At Reynolds number above about 2000 there is inertial turbulent flow. At Reynolds number below about 1500, flow of a Newtonian liquid is laminar. Flow paths within porous materials often have small dimensions and rapid flow rates through such materials are not practical with the consequence that it is not a practical possibility for flows through porous materials to undergo inertial turbulence.

Elastic turbulence is different from inertial turbulence. It is a physical phenomenon discovered at the end of the twentieth century. It has been observed at low flow speeds where Reynolds number is low and a Newtonian liquid would be in a state of laminar flow. Some early observations of elastic turbulence used the older term "elastic instability". However,

that term is more general and includes other forms of instability in flow. Literature documents relating to elastic turbulence include a detailed discussion by Steinberg in Annual Review of Fluid Mechanics, vol 53, pages 27-58 (2021).

The phenomenon of elastic turbulence of a liquid requires:

(i) A solute which has elastic properties, enabling the liquid solution to display elastic turbulence,
(ii) A flow path for the liquid which compels a succession of changes in its direction of flow, and
(iii) Pumping the liquid along the flow path at a sufficient velocity.

A succession of changes in direction may be continuous curvature as in concentric or helical flow or may alternate between turning to the right and to the left.Elastic turbulence occurs in solutions containing a solute which has a flexible structure. One category of material which is able to undergo elastic deformation and enable a solution to display elastic turbulence is a polymer containing long flexible linear chains. The number of monomer units in the polymer may be at least 5000 and may be considerably more such as at least 25,000. The monomer units may be present in linear chains of at least 1000 monomer units which may each be connected one to the next by a single covalent bond, so that one monomer unit can rotate relative to adjoining monomer units. Individual linear chains may be longer and a polymer may contain a linear chain of at least 5000 or even at least 10,000 monomer units. A polymer chain may contain only one kind of monomer or the chain may be a copolymer of more than one monomer, for instance a block copolymer which is linear. A polymer may also include side chains attached to a long chain of monomer units which are connected together by single covalent bonds. If a chain contains units which are themselves an oligomer, as in a block copolymer for instance, the oligomeric units may rotate relative to one another more freely than monomer residues within an oligomeric unit. A polymer may include some chain branching, for instance at branch points where three or more linear chains, each of at least 1000 monomer units, are connected together. When using a long chain polymer to enable elastic turbulence to occur, it is desirable to include a biocide to protect the long chain linear polymer from biodegradation.

The flexibility of the polymer chains enables the polymer molecules to become entangled. The flexibility of polymer chains can be described by means of a mathematical model. The freely jointed chain model is commonly used and the flexibility of a particular polymer can be indicated by parameters of an equivalent freely jointed chain (itself a mathematical model). A description of this approach is provided by Chapter 2 of "Polymer Physics" by Rubinstein and Colby, 2003, Oxford University Press. An equivalent freely jointed chain has the same mean-square end-to-end distance and the same maximum end-to-end distance as the actual polymer but is considered to consist of so-called Kuhn monomers which are freely rotatable relative to each other. These model monomers have a length, termed the Kuhn length, and a molar mass.

Polymers to enable elastic turbulence may contain at least one flexible polymer chain with length and composition represented by at least 5000 Kuhn monomers having a Kuhn length not more than 100 Angstroms (10nm) and possibly not more than 50 Angstroms. If a polymer is a single unbranched chain, its length and composition may correspond to at least 20,000 Kuhn monomers and possibly at least 50,000 Kuhn monomers.

The mean molecular weight of the polymer may be at least one Mega Dalton i.e. at least $10^6$ Daltons, possibly at least 10 Mega Daltons or more. The concentration of such long chain/high molecular weight polymer included in a solution for enabling elastic turbulence to occur may be under 5% by weight, for instance in a range from 0.05% or 0.1% up to 1% or 2% by weight.

Elastic turbulence has been observed with several different long chain polymers in solution. One such polymer is polyacrylamide, which may be hydrolysed or partially hydrolysed. Experimental evidence for elastic turbulence in a solution of high molecular weight polyacrylamide was given by Groisman and Steinberg in "Elastic Turbulence in a polymer solution flow" Nature, Vol 45 p53 (2000). Other instances of long chain polymers reported to give rise to elastic turbulence include polyisobutylene of molecular weight 4 to 6 Megadaltons dissolved in an organic solvent (Dris and Shaqfeh, J. Non-Newtonian Fluid Mech. Vol 80 pages 1 to58 (1998)), polystyrene of molecular weight 18 Megadaltons in an organic solvent (Magda and Larson, J. Non-Newtonian Fluid Mech. Vol 30 pages 1-19 (1988)) and polyethylene oxide of molecular weight 4 MegaDaltons in an aqueous solution (Davoodi et al, J. Fluid Mech. vol 857, pages 823-850 (2018)). Kuhn lengths for polystyrene and polyethylene oxide given by Rubinstein and Colby, page 53 are 18 Angstroms and 11 Angstroms. Kuhn length for polyacrylamides has been reported as 15 to 25 Angstroms (Fetters, Lohse and Colby, "Chain Dimensions and Entanglement Spacings" in Physical Properties of Polymers Handbook; Mark,J.E.,Ed.; Springer: NewYork, 2007; pages 447-454).

Long chain partially hydrolysed polyacrylamide linear polymers with a molecular weight of more than 1 MegaDalton are available from SNF Floerger, whose headquarters are in Andrézieux, France.

Another category of material able to undergo elastic deformation and enable a solution to display elastic turbulence is a viscoelastic surfactant which forms worm-like micelles in solution. There is extensive scientific literature concerning surfactants which form worm-like micelles, their properties and applications. One review is Yang "Viscoelastic wormlike micelles and their applications" Current Opinion in Colloid & Interface Science vol 7 pages 276_281 (2002). Discussions of properties include Raghavan and Kaler "Highly Viscoelastic Wormlike Micellar Solutions Formed by

Cationic Surfactants with Long Unsaturated Tails" Langmuir vol 17, pages 300-306 (2001) and Beaumont et al "Turbulent flows in highly elastic wormlike micelles" Soft Matter vol 9 page 735 (2013). An example, using cetyl trimethyl bromide as the surfactant, is mentioned by Fardin et al "Elastic Turbulence in Shear Banding Wormlike Micelles" Physical Review Letters vol 104 178303 (2010).

When a solution contains a substance able to cause elastic turbulence, the phenomenon of elastic turbulence occurs if the solution is flowing at a sufficient flow velocity (which may be a low velocity) and the path of flow causes the streamlines of the flow to curve. Consequently, one known possibility for a flow path which induces elastic turbulence is a serpentine channel. Another possibility is a flow path with obstructions which compel the stream lines of flow to change direction. Such obstructions may be manufactured and arranged in a pattern so as to compel flow around the obstructions to change direction.

A porous material can also provide a flow path which causes a succession of changes of direction. Changes in the directions of pores and connections between pores can compel changes of flow direction. A porous material may be fibrous and the openings between the fibres will provide flow paths with a succession of changes of direction.

The ability of a fluid composition to display elastic turbulence can be shown experimentally using a laboratory rheometer. In a cone and plate rheometer cell, the onset of elastic instability with application of increasing shear is observed as an apparent increase in viscosity at a particular shear rate associated with an abrupt increase in the noise in the measured torque signal. This has been described by D.O. Olagunju, "Instabilities and bifurcations of von Karman similarity solutions in swirling viscoelastic flow" in Z Angew Math Phys, 46 (1995) 224-238 and also by E. Tran, A. Clarke, "The relaxation time of entangled HPAM solutions in flow", Journal of Non-Newtonian Fluid Mechanics, 311 (2023) 104954.). The apparent increase in viscosity can be seen as a change in the slope (sometimes referred to as an uptick) in the plot of viscosity against shear rate.

Fig 1 shows results from experimental tests carried out with a laboratory rheometer operated to take measurements at increasing steps in shear rate and then at decreasing steps. It is a plot of dynamic viscosity against increasing shear rate for three aqueous solutions containing 0.456wt% sodium chloride, a small percentage of a polymer and a few drops of a biocide consisting of isopropanol and thiourea. In one of these aqueous solutions (points shown as open circles in Fig 1) the polymer was 0.24wt% of Flopaam3630 from SNF Floerger which is linear polyacrylamide with a mean molecular weight of 18 to 20 MegaDaltons. In a second of these solutions (points shown as circles containing a cross) the polymer was 0.24wt% xanthan. In the third of these solutions (points shown as filled circles) the polymer was 0.12wt% Flopaam 3060 and 0.12wt% xanthan, i.e. a 1:1 mix. The solutions containing polyacrylamide, either alone or in mixture with xanthan, showed change in slope of the plotted curve at approximately $150s^{-1}$. This indicated the onset of elastic turbulence with increasing shear rate. The solution containing xanthan had no such change of slope, indicating that this more rigid polymer did not enable elastic turbulence to occur.

A similar experiment used a solution containing 0.2wt% of Flopaam 6040, also from SNF Floerger, with of mean molecular weight between 25 and 30 MegaDaltons. Here too the onset of elastic turbulence with increasing shear rate was seen as a change in slope of the plotted curve at approximately $150s^{-1}$ indicating the onset of elastic turbulence. (Shear rates for the onset of elastic turbulence in electrochemical half-cells may be lower).

Figs 2 to 6 relate to experimental demonstrations of elastic turbulence in aqueous solutions of viscoelastic surfactant and also in aqueous solutions of a flexible polymer.

Fig 2 shows a flow guide 10 used in these experiments. It has a regularly spaced array of pillars 12 of square cross section integral with a base 13. Two edges of the array are completed with pillars 14 which have a triangular cross section. Fig 3 is an enlarged top view of a portion of the flow guide. As shown, the pillars 12 each have a square cross section with flat faces 16 meeting at corner edges 17 and 18. The width of a flat face 16 is indicated as "a" in Fig 3 and the spacing between the faces 16 of adjacent pillars is indicated as "b". The width of the gap between two confronting edges 18 is of course given by Pythagoras theorem as $\sqrt{(2b^2)}$. Each pillar 12 is positioned so that the diagonal across the square cross section between corner edges 17 is aligned with the overall direction of flow. As indicated by broken lines, liquid flows through the gaps between confronting edges 18 of adjacent pillars 12, but is then compelled to turn by pillars downstream. Thus the array of pillars 34 obstructs straight line through flow of liquid, causing the streamlines of the flow to change direction repeatedly.

The flow guide 10 is made of transparent polymer and is located within a chamber 20 which is shown in cross section in Fig 4. The chamber 20 is formed by two blocks of transparent polymer, 21, 22 held together by bolts which are not shown. The flow guide 10 is in a cavity between the two blocks. There is a liquid inlet 23 to the cavity and a liquid outlet 24. When liquid is pumped through the chamber 20, the liquid enters the flow guide 10 at the end indicated 15 in Fig 2 and then flows through the gaps between the pillars 12. The repeated changes in direction can cause elastic turbulence to occur, if the liquid contains a substance able to display elastic turbulence and the flow velocity is sufficient.

The occurrence of elastic turbulence was observed using a technique utilizing the phenomenon of birefringence. The apparatus is shown in Fig 4. It has some similarity to apparatus described by Moss GR and Rothstein JP in "Flow of wormlike micelle solutions through a periodic array of cylinders". Journal of Non-Newtonian Fluid Mechanics, Vol 165 pages 1-13, (2010).

Beams from a red LED light 25R and a green LED light 25G are directed along paths, respectively shown as a

solid line and as a broken line, towards a video camera 26. The chamber 20 is positioned between linear polarizing filters 28R, 29R set with their polarization directions at right angles (i,e, crossed) and between linear polarizing filters 28G, 29G which are also set with their polarization directions at right angles to each other. Consequently, no light can reach the video camera 26 unless birefringence in the chamber 20 alters the angle of polarization of light as it passes through the chamber. The filters 28R and 28G are set with their polarization directions at right angles to each other, so that the planes of polararisation of the red and green light entering the chamber 16 are at right angles to each other. Dichroic mirrors 30 which pass the red beam and reflect the green beam are used to merge the red and green beams, then to separate them after they have passed through chamber 20, and subsequently to reunite them before they arrive at the camera 26.

Other parts of the apparatus are mirrors 38, lenses 32, red and green bandpass filters 34G and 34R and dichroic mirrors 36 which are set with a 90° difference in rotation with respect to the red beam path in order to cancel rotation of polarization induced due to Fresnel refraction. Such dichroic mirrors were not needed for the green beam because its polarization is such that no rotation of polarization was induced.

Wormlike micelles formed by viscoelastic surfactants are birefringent. Consequently, when these molecules become aligned by liquid flow within the chamber 20 and are illuminated with polarized red and green light, they can change the plane of polarization of the light thereby allowing some of this light to pass through the filters 29R and 29G to the camera, although this does not occur if the alignment of the micelles coincides with the plane of polarization of the light. Providing two light beams with different planes of polarization as they enter the chamber 20 addresses this issue: if micelles happen to be aligned with the red polarization, they will not be aligned with the green polarization and vice versa. Hence the apparatus is sensitive to polarization alignment in any direction.

When there is flow of a liquid containing wormlike micelles through the chamber, these micelles become aligned through extensional flow as the liquid flows around the pillars 12, 14 of the flow guide 10, and the birefringence from the aligned micelles can be seen as red or green colour in pictures or video recorded by the camera 26.

A first experiment was carried out using a solution similar to one mentioned by Moss and Rothstein in the paper above. This solution contained 100mM (approx. 4wt%) of the viscoelastic cationic surfactant cetylpyridinium chloride and 50mM (approx. 0.8wt%) of sodium salicylate dissolved in a brine of 100mM (approx. 0.6 wt%) sodium chloride in distilled water.

The viscoelastic solution was pumped through the chamber 20 at a low flow rate of 5ml per minute. The camera 26 recorded video at twenty frames per second for a period of 5 seconds and the recording showed that the pattern of flow around the pillars of the flow guide remained constant. Four pictures from that video recording, at half second intervals, are shown in grayscale as the top row in Fig 5 and it can be seen that there is negligible change from one picture to the next. The original coloured pictures showed a line of red colour extending in the flow direction from the downstream corner of each pillar. A white outline has been drawn around one of these indicated 40 in one picture. These lines of red colour remained at the same intensity and in the same position throughout the video recording. The flow rate was then increased to 25 ml/min and video was again recorded for 5 seconds. This video recording of flow at 25ml/min was very different from that at 5ml/min. It showed constant movement. Patches of colour, which is where extensional flow was aligning micelles, were moving from one position to another and varying in intensity. Four pictures from the video with 25ml/min flow rate are reproduced in greyscale as the bottom row of Fig 5. There are a number of changes from each picture to the next. For instance, arrow 41 points to a patch of red colour which was present in one picture but absent from the preceding picture and diminished in the two subsequent pictures. At the position 42 there was an area of red colour which was not present in the preceding picture and again diminished in the next two pictures. The second picture in the lower row also shows an intense green area 43, which was not present in the first picture and which largely disappeared in the third picture. Thus it could be seen that flow at 5 ml/min was laminar but at 25ml/min the flow had become turbulent.

Similar experiments were carried out with a solution containing partially hydrolysed polyacrylamide of average molecular weight 18MDa (HPAM) to enable the display of elastic turbulence and xanthan as an additional thickening agent, and with a comparative solution containing only xanthan (which is too rigid to cause elastic turbulence, as mentioned above). These polymers do not form micelles but do cause birefringence when aligned. Flow rates and observations are given in the following table which also includes the comments from the above experiment with viscoelastic surfactant.

| Solutes | Flow rate | Comments concerning pictures |
|---|---|---|
| 4wt% cetyl pyridinium chloride<br>0.8wt% sodium salicylate and<br>0.6wt% sodium chloride | 5ml/min | Red lines extending downstream from pillars do not change position. No changes in overall appearance |
| | 25ml/min | Red lines extending from pillars change angle relative to flow direction and change intensity. Green areas appear, change position and disappear. |

(continued)

| Solutes | Flow rate | Comments concerning pictures |
|---|---|---|
| 0.25wt% HPAM and 0.25wt% xanthan | 5 ml/min | Red lines extending downstream from pillars do not change position. Green areas do not change. |
| | 15 ml/min, and 30ml/min | Movement of red areas extending downstream from pillars, prominent green areas appear and change position |
| 0.5wt% xanthan | 5 ml/min, 30ml/min and 40ml/min | Red and green areas do not change position at any flow rate |
| 0.25wt% xanthan | 30ml/min | Red and green areas do not change position |
| 0. 12wt% HPAM, 0.12wt% xanthan, and 0.465wt% NaCl | 5 ml/min | Red and green areas do not change position |
| | 45ml/min | Red and green areas change in shape and position |

It is apparent from these comments that the solution containing HPAM and xanthan displayed elastic turbulence at 15ml.sec and above, but solutions containing xanthan without HPAM did not display elastic turbulence even at 30ml/min.

A further experiment demonstrated that elastic turbulence released bubbles from an electrode. As shown in Fig 6, the chamber 20 was provided with a platinum wire electrode 45 projecting into space between two of the pillars of the flow guide and a small copper block 46 as a second electrode at the surface of the upper block 21. Electrical connection to the block 46 is indicated at 47. A power supply of about 2 volts was connected to the electrodes, with copper block 46 positive and wire 45 negative.

A solution containing 0.12wt% HPAM of mean molecular weight 18MDa, 0.12wt% xanthan and 0.456wt% sodium chloride was pumped through the flow guide 10 and the flow was observed using the apparatus as shown in Fig 4. When the power supply was switched on, bubbles were seen in the flow downstream from the platinum wire electrode. The bubbles could be seen in the flow because they refract light out of the light path and so appear dark.

Fig 7A is a picture of flow when the flow rate was 5ml/min at which there is no elastic turbulence and Fig 7B is a picture of flow when the flow rate was 45ml/min at which elastic turbulence is present. The pictures were processed to show the bubbles in contrast with the remainder of the picture and squares have been drawn to show the edges of some pillars more clearly..

The diameters of the bubbles were estimated visually by comparison with the dimensions across and between the pillars 12. When the flow rate was 5ml/min, which was too low to cause elastic turbulence, the bubbles had diameters in a range from approximately 0.2 to 0.5mm but when the flow rate was increased to 45ml/min at which elastic turbulence is present, the bubbles were clearly smaller and had diameters in a range from approximately 0.03 to 0.2mm, showing that the elastic turbulence was dislodging the bubbles from the platinum wire electrode 45 before they had grown to the size at which bubbles left the electrode in the absence of elastic turbulence.

Figs 8 to 14 show various possibilities for regenerative fuel cells (RFCs) embodying the present disclosure. There are a number of possibilities for the arrangement of component parts within the two half-cells. There are also a number of possibilities for the compositions of the electrolyte liquids which are used. Because the present disclosure is concerned with the use of elastic turbulence to enhance the efficiency of movements within electrochemical cells, in particular the release of bubbles from surfaces, the extensive literature concerning materials for membranes, porous layers and catalysts has not been discussed here. Published literature concerning materials for porous layers, electrodes and catalysts for producing and consuming hydrogen and oxygen includes Chen et al, "Key Components and Design Strategy for a Proton Exchange Membrane Water Electrolyzer" Small Structures vol4, 2200130 (2023) and Niblett et al, " Review of next generation hydrogen production from offshore wind using water electrolysis" Journal of Power Sources 592 233904 (2024).

Figs 8 and 98 show an example regenerative fuel cell. It has a casing 50 within which there are half-cells 51L and 51R at either side of a separator membrane 52. The system to the left of the separator 52 produces hydrogen in the half-cell 51L during charging and consumes that hydrogen as fuel during discharge. The half-cell 51R in the system at the right of the separator 52 does not produce or consume gas, it carries out a reversible change in the oxidation state of ions in solution. The half-cell 51L to the left of the separator 52 has a negative electrode 54. The half-cell 51R to the right has a positive electrode 55. Electrical connections are indicated at 56.

Each half-cell has a bottom inlet 62 and a top outlet 64. Pressure sensors 65 are fitted near each inlet 62 and outlet 64. During both charge and discharge a pump 58 propels electrolyte liquid from storage vessel 60 through piping to the inlet 62 of half-cell 51L and the electrolyte liquid is piped from the outlet 64 of the half-cell 51L back to the vessel 60 via a gas

liquid separator 66. At the same time, during both charge and discharge, a pump 59 propels a second electrolyte liquid from storage vessel 61 through piping to the inlet 62 of half-cell 51R and this electrolyte liquid is piped from the outlet 64 of the half-cell 51R back to the vessel 61.

When charging, i.e. when electrical power is supplied to the overall system, hydrogen is produced at the electrode 54 and a mixture of electrolyte liquid and hydrogen gas leaves the half-cell 51L at its outlet 64 from where it flows to a gas/liquid separator 66. Electrolyte liquid is returned along pipe 68 to the vessel 60 while hydrogen gas leaves from an upper outlet 70 of the gas/liquid separator 66. The hydrogen gas is pumped by compressor 72 into pressure vessel 73 where it is stored. While discharging electrical power, hydrogen gas is released from the pressure vessel 73 through regulating valve 74 and returned through an inlet 75 to the lower end of the half-cell 51L.

In accordance with this disclosure, the electrolyte liquid flowing through the half-cell 51L includes a solute which enables the liquid to display elastic turbulence. This may be a high molecular weight linear polymer which is flexible and able to undergo elastic deformation or may be a viscoelastic surfactant which forms wormlike micelles, as discussed above. This half-cell contains a flow guide 76 which has an array of spaced pillars 12 of square cross section integral with a base in the same manner as shown by Fig 2 although this flow guide 76 may have a longer and wider array of pillars 12 than are shown in Fig 2. As shown by Fig 9 the base of the flow guide 76 has holes 78 through it at positions between pillars 12 to allow passage of the ions which pass through the separator membrane.

Other shapes of flow guide, and more specifically other shapes of pillars can be used. This is illustrated by Fig 10 which shows pillars 80 with another possible cross section. The surfaces 82 have convex curvature and intersect concave surfaces 83 at edges 84. Electrolyte liquid flows through the gaps between edges 84 as shown by the broken lines and is compelled by the arrangement of pillars 80 to change direction as it does so.

Referring again to Fig 8, pumping power is chosen to give flow speeds at which flow to the inlets 62 of the half-cells is laminar. However, as the electrolyte liquid passes through the flow guide 76 in the half-cell 51L, the pillars 12 cause the streamlines of the flow to change direction many times and thereby cause elastic turbulence to occur. In the half-cell 51L, during charging, this elastic turbulence causes hydrogen bubbles to detach from the electrode surface before they grow to the size at which buoyancy would detach them, thus keeping more of the electrode surface available for electrochemical reaction and thereby enhancing the efficiency of the fuel cell. During discharge the elastic turbulence enhances mixing of gaseous hydrogen with flowing liquid and enhances transport of hydrogen to the electrode surface.

For the purpose of explanation, it is assumed that in this embodiment the electrochemical reaction in the half-cell 51R is fast and that the efficiency of the half-cell 51L predominantly determines the overall efficiency of the whole system. It is therefore chosen to utilize elastic turbulence only in the half-cell 51L and the electrolyte liquid for the half-cell 51R is therefore formulated without any solute to enable elastic turbulence. However, in other embodiments, the half-cell 51R may also contain a flow guide 76 and use an electrolyte liquid which contains a solute, either molecular weight flexible polymer or viscoelastic surfactant as discussed above, to create elastic turbulence in the half-cell 51R. When this the case, the elastic turbulence in the half-cell 51R enhances mass transport of reactive ions to the electrode surface and enhances mass transport of reacted ions away from the electrode surface during both charge and discharge, thereby enhancing the efficiency of the half-cell 51R.

One possibility is that the electrolyte liquid circulated through half-cell 51L from the vessel 60 is an acidic aqueous solution and that the electrolyte liquid circulated through the half-cell 51R from the vessel 61 is an acidic aqueous solution of a vanadium salt. The reaction for the production of hydrogen during charging and consumption of hydrogen during discharge is

$$2H^+ + 2e^- \rightleftharpoons H_2$$

The electrode 54 at which hydrogen is formed and consumed may be carbon or a metal, in both cases with a reaction catalyst deposited on the electrode surface. A number of catalysts are known for this reaction in acidic conditions including platinum, platinum alloys, palladium and iridium. The reaction in the half-cell 51R is a reversible change in the oxidation state of vanadium between V(IV) and V(V):

$$VO_2^+ + 2H^+ + e^- \rightleftharpoons VO^{2+} + H_2O$$

For this electrochemical system with acidic electrolyte liquids, the membrane 52 is an ion exchange membrane which prevents mixing of the electrolyte liquids and their constituents but does allow the passage of hydrogen ions. There is extensive scientific literature concerning the use of vanadium ions in half-cells of flow batteries and concerning ion exchange membranes as separators between half-cells.

The redox reaction of vanadium ions is an example of the many electrochemical reactions which may be used for the half-cell 51R. Another example is cerium ions. Chang et al in "Cerium/Ascorbic Acid/Iodine Active Species for Redox Flow Energy Storage Battery" Molecules vol 26 page 3443 (2021) have described the use of a solution of cerium nitrate in

methane sulphonic acid for the reversible reaction

$$Ce^{3+} \rightleftharpoons Ce^{4+} + e^-$$

A further example is a reaction of manganese ions discussed by Rubio-Garcia (one of the present inventors) et al in "Hydrogen/manganese hybrid redox flow battery" J. Phys. Energy vol 1, 015006 (2019). The reaction

$$Mn^{2+} \rightleftharpoons Mn^{3+} + e^-$$

takes place in in sulfuric acid with titanium sulphate present to inhibit conversion of $Mn^{3+}$ to manganese dioxide.

The reaction in the positive half-cell 51R may be reaction of an organic species. One possibility is the reversible reduction of benzoquinone to hydroquinone. Another possibility is the reversible conversion of 2,2,6,6-tetramethylpiperidine-1-oxyl (TEMPO) to a stable aminoxyl radical. These are mentioned in a review by Cannon et al "Aqueous Redox Flow Batteries: Small Organic Molecules for the Positive Electrolyte Species" ChemSusChem, vol 16, e202300303, 2023.

Another paper from Cannon et al "Methylene Blue in a High-Performance Hydrogen-Organic Rechargeable Fuel Cell" ACS Appl. Energy Mater. vol 7, page 2080 (2024) has described the use of the organic compound methylene blue as the redox active species in the positive half-cell of a regenerative fuel cell.

It is also possible that the electrolyte liquids in the two half-cells could be alkaline, such as an aqueous solution of sodium hydroxide. In alkaline solution the reaction by which hydrogen is produced and consumed at the electrode 54 in the half-cell 51L is

$$2H_2O + 2e^- \rightleftharpoons H_2 + 2OH^-$$

The electrolyte liquid for the half-cell 51R may be a sodium hydroxide solution containing sodium ferrocyanide. During charging, ferrocyanide ions are reversibly converted to ferricyanide at the electrode 55 which may be carbon. The reaction can be written as

$$Fe(CN)_6^{4-} \rightleftharpoons Fe(CN)_6^{3-} + e^-$$

In an alkaline system the separator membrane 52 is an ion exchange membrane which allows passage of hydroxyl ions.

Figs 11 to 14 show other possible arrangements within the half-cells 51L and 51R. All of these possibilities use an ion exchange membrane as separator 52. In these embodiments the electrochemical cell is connected to pumps, storage vessels and gas/liquid separators in the same way as the cell of Fig 8. The electrolyte liquids used in both half-cells contain a flexible long chain polymer or a viscoelastic surfactant which forms worm like micelles.

In Fig 11 flow guides 76 are not used. Instead, pads of porous material 85 fill the gaps between the electrodes 54, 55 and the separator 52. Each pad 85 provides a network of small interconnected channels for flow through it and this structure compels the flowing liquid to make repeated changes of direction, thereby causing elastic turbulence to occur. The porous pads 85 may for example be made from a non-woven fibrous material.

Fig 12 shows an electrochemical cell in which both half-cells each have a porous electrode 86 positioned directly adjacent to the separator 52. This electrode may for example be made from a metal mesh or made as a mat of conductive carbon fibrous material onto which a metallic coating is deposited. A flow guide 76, which may be made of an electrically nonconductive material, is positioned between each electrode 86 and the structural casing 50. The flow guide pillars 12 are adjacent to this porous layer 86 and the liquid flow through the guide 76 is pumped at a speed sufficient that the guide 76 causes elastic turbulence, both within the guide 76 and in the adjacent porous electrode 86. In the half-cell 51L, the porous electrode 86 has on its surface a catalyst for the reaction which forms and consumes hydrogen.

In the electrochemical cell of Fig 13, the half-cell 51L has an electrode assembly consisting of a conductive current carrier 94 and porous layers. It has a thin layer 90 of porous material positioned next to the separator membrane 52. This porous layer 90 has a reaction catalyst deposited on its surface. Adjacent to this catalyst layer 90 is a further porous layer 92 which provide a network of interconnected small channels through which flow both the electrolyte liquid and hydrogen formed at the layer 90 during charge, or entering through inlet 75 during discharge. The porous structure of layer 92 compels the flow of electrolyte liquid to make repeated changes of direction so that elastic turbulence occurs. Outwardly from the layer 92 there is the conductive electric current carrier 94 which may be a metal sheet or a metal grid. The right hand half-cell 51R is the same as the half-cell 51R in Fig 11. Electrical connections are again indicated at 56.

Fig 14 shows an electrochemical cell which is a variation on the arrangement shown in Fig 13. In the half-cell 51L the current carrier 94 and porous layer 92 are replaced by an electrically conductive flow guide 96 which has the size and

shape of the flow guides 76 mentioned above, but is made from metal or has a metallic surface coating. This flow guide 96 functions as the current carrier of the electrode assembly. It is positioned with its pillars 12 adjacent to the catalyst layer 90. When electrolyte liquid is pumped through the half-cell 51L, elastic turbulence within the flow guide 96 will also extend into the adjacent catalyst layer 90.

Fig 15 shows an embodiment in which the half-cell 101R produces oxygen during charge and consumes oxygen during discharge. The half-cells 101L and 101R are connected to pumps 58, 59, storage vessels 60, 61 and a gas/liquid separator 66 in similar manner to the embodiment shown by Fig 8. There is no provision for storing the oxygen produced during storage, it is vented to atmosphere at 102 while charging. During discharge, air is blown into the half-cell 101R by a fan 103.

The half-cell 101R has a similar arrangement to the half-cell 51L of Fig 14. It contains a porous layer104 made of conductive carbon fibrous material with catalysts for the reactions to produce and to consume oxygen deposited on its surface. This layer is positioned adjacent to the separator membrane 52. An electrically conductive flow guide 96 is positioned between this 104 and the casing 50. The electrolyte liquid circulating through the half-cell 101R may be sulfuric acid and the overall electrochemical reaction in that half-cell 101R is

$$O_2 + 4H^+ + 4e^- \rightleftharpoons 2H_2O$$

The half-cell 101L contains an electrode 55 with a porous layer 85 between it and the separator 52. The electrolyte liquid circulating through this half-cell may be a vanadium salt in sulfuric acid as suggested in US patent 5318865, so that the reversible reaction is

$$V^{2+} \rightleftharpoons V^{3+} + e^-$$

Further possibilities are changes of oxidation state between Ti(IV) and Ti(III) and between CR(III) and Cr(II). The reaction in the half-cell 101L may use an organic compound. One possibility is 1,5-dihydroanthraquinone suggested for flow batteries by Huang et al in "Molecular engineering of dihydroxyanthraquinone-based electrolytes for high-capacity aqueous organic redox flow batteries" Nature Communications vol 13 page 4746 (2022). Another possibility is a modified viologen suggested by Hwang et al in "Integration of Functional Groups to Enhance the Solubility and Stability of Viologen in Aqueous Organic Redox Flow Batteries" ACS Appl. Mater. Interfaces 2024, vol 16, page 28645 (2024).

To simplify explanation, Figs 7 to 14 have shown single electrochemical cells consisting of two half-cells. It is common practice to assemble a plurality of electrochemical cells together. This is illustrated by Fig 16 which shows four fuel cells which produce and consume hydrogen arranged side by side. In this embodiment, the half-cells in which hydrogen is produced and consumed are supplied with electrolyte liquid from a single vessel 60 and hydrogen is stored in a single pressure vessel 73. The second electrolyte liquid is circulated from a single vessel 61. The fuel cells maybe electrically connected together in series or in parallel.

For electrochemical processes as described above, with a polymer or surfactant present in a liquid electrolyte, a flow rate able to cause elastic turbulence to occur may be found by monitoring electric current during charging while progressively increasing the flow rate. When elastic turbulence begins it will be apparent as an increase in the flow of electric current because of improved gas release from half-cells where this takes place or improved mass transport to or from an electrode where gas is not produced and consumed.

However, it is also possible to determine a suitable flow rate through a flow guide or a porous pad or porous electrode without operation of a half-cell. This is illustrated by Figs 17 to 19. As shown in Fig 17, a structure 118 has dimensions to fit around a proposed flow guide 76 as in a half-cell but with no separate electrode or membrane present. Instead, a plate 110 is fitted against the tops of the pillars of the flow guide 76. The inlet 114 is connected to a pump 116 which delivers liquid from a tank 118 which is maintained at a fixed temperature. This liquid should be the same as the liquid which will flow through the half-cell when it is in the fuel cell. The outlet 120 is connected to a graduated vessel 122 for measuring volume of liquid which has been pumped through the flow guide 56 in a chosen interval of time, and thereby determining the flow rate.

Pressure sensors 111, 122 are fitted to the inlet and outlet regions of the structure 108, upstream and downstream of the flow guide 76. When liquid from the tank 118 is pumped through the flow guide 76 there will be a pressure drop between the inlet pressure sensor 111 and the outlet pressure sensor 112. When the flow rate is very low, the flow will be laminar, without any elastic turbulence. The minimum flow rate to cause elastic turbulence in the flow guide 76 can be found by progressively increasing the pump speed to increase the flow rate and plotting the flow rate against the pressure drop or the pump speed (which is proportional to pressure drop). This plot will show a change in slope on reaching the flow rate at which elastic turbulence begins.

This is illustrated by the following description of experimental work with apparatus similar to that shown. The results of the experiments are shown in Figs 17 and 18. An initial calibration determined relationships between pump

speed and flow rate. The tank 118 was filled with water. The pump was used to propel water through the flow guide at progressively increasing flow rate. The flow rates measured downstream of the flow guide were recorded and are shown in Fig 18 (triangle points). This calibration procedure was then repeated with an aqueous solution containing 0.1 wt% of Flopaam 3630 polyacrylamide in the tank 118. This gave the non-linear plot also shown in Fig 18 (circular points).

Fig 19 shows the measured flow rates plotted against pump speeds. With water the plot was approximately linear (as would be expected because water is a Newtonian liquid) but with the polyacrylamide solution there was a very sharp change in the slope of the plot at the point E, indicating that the flow rate at this point was the minimum required to cause elastic turbulence with that polyacrylamide solution and apparatus.

Measurements of this kind make it possible to estimate Reynolds number for flow through a flow guide 76. The formula which may be used to determine Reynolds number (Re) for flow through a chamber containing obstructions so as to compel the flow streamlines to bend is:

$$Re = \frac{\rho UL}{\eta}$$

where $\rho$ is density of the fluid in Kg per cubic metre,
*U* is the flow velocity in metres per second,
*L* is the width of the gaps between the obstructions in the chamber, and
$\eta$ is the viscosity of the fluid in Pascal.sec.

If the flow rate is measured as volume in unit time, the formula above becomes

$$Re = \frac{\rho QL}{\eta A}$$

where *Q* is the flow rate in cubic metres per second and *A* is the cross sectional area, transverse to the overall direction of flow, through which the flow passes.

In an example of a flow guide with square pillars, the flat faces of the pillars had a width of 4mm and the height of the pillars was 7mm. The spacing between the faces of adjacent pillars was 2mm and so the gaps between adjacent edges was √8 = 2.83mm. A full line of pillars transverse to the overall direction of flow contained 12 pillars with 11 gaps between edges 44, and so the cross section available for flow was

$$11 \text{ x } 7 \text{ x} 2.83 \text{mm}^2 = 11 \text{ x } 7.10^{-3} \text{ x } 2.83.10^{-3} \text{ m}^2.$$

Flow rate was measured as 75 ml.sec$^{-1}$ = 7.5 x 10$^{-5}$ m$^3$sec$^{-1}$. Density of the fluid was 1000kg/m$^3$; viscosity was 0.008Pa.sec. Putting these numbers into the formula mentioned above

$$Re = \frac{\rho QL}{\eta A} = \frac{1000\, x\, 7.5.10^{-5}\, x\, 2.83.10^{-3}}{8.10^{-3}\, x\, 11\, x\, 7.10^{-3}\, x\, 2.83.10^{-3}}$$

which is Re = 12.17

In embodiments of this disclosure where a flow guide is used, the rate of flow through the flow guide may be such that the Reynolds number is at least 1 or 2 but not more than 250. These are Reynolds numbers at which a Newtonian liquid with no additive to enable elastic turbulence would be in a state of laminar flow.

Various embodiments of this disclosure have been set out above. These are intended to assist understanding of this disclosure, but not to limit it in any way. It should be appreciated that any features or possibilities described in combination may, where it is practical to do so, be used individually. Also, features or possibilities mentioned in the following claims or described in any embodiment may be used in any other embodiment, in so far as it is practical to do so and in particular where two or more of the following claims are dependent on the same preceding claim, the reader should understand that the present disclosure includes any possible combination of any two or more or all of those dependent claims with each other and also with that preceding claim.

## Claims

1. A regenerative fuel cell comprising:

   a first electrochemical system including a first electrochemical half-cell,
   a second electrochemical system including a second electrochemical half-cell and a selectively permeable separator between the first and second half-cells,

   the first electrochemical half-cell comprising a first electrode, a first electrolyte liquid able to undergo reaction at the first electrode and structure defining a liquid flow path carrying the first electrolyte liquid into contact with the first electrode, wherein the first electrode and the first electrolyte liquid are such that the first half-cell produces a gas while electrical power is supplied to the fuel cell and consumes the gas while electrical power is discharged from the fuel cell,
   the first electrochemical system also comprising a storage vessel for the first electrolyte liquid and a pump connected to circulate a flow of first electrolyte liquid from the storage vessel to the first half-cell, through the first half-cell and from the first half-cell back to the storage vessel,
   the second electrochemical half-cell comprising a second electrode and a second electrolyte liquid able to undergo a reaction at the second electrode which does not produce or consume gas,
   the second electrochemical system also comprising a storage vessel for the second electrolyte liquid and a pump connected to circulate a flow of second electrolyte liquid from the storage vessel to the second half-cell, through the second half-cell and from the second half-cell back to the storage vessel,
   wherein the first electrolyte liquid contains a solute enabling the liquid to display elastic turbulence, and the flow path carrying the first electrolyte liquid into contact with the first electrode is configured to compel changes in the direction of liquid flowing through the first half-cell so as to cause elastic turbulence of the first electrolyte liquid flowing into contact with the first electrode.

2. The regenerative fuel cell of claim 1 wherein the gas produced and consumed by the first electrochemical system is hydrogen.

3. The regenerative fuel cell of claim 2 wherein the first electrochemical system further comprises a pressurisable hydrogen storage vessel and a compressor for pumping the produced hydrogen into the hydrogen storage vessel.

4. The regenerative fuel cell of claim 1, claim 2 or claim 3 wherein the solute enabling the first liquid to display elastic turbulence is a linear polymer with a molecular weight of at least $10^6$ Daltons.

5. The regenerative fuel cell of claim 1, claim 2 or claim 3 wherein the solute enabling the first liquid to display elastic turbulence is a viscoelastic surfactant which forms worm-like micelles in the liquid.

6. The regenerative fuel cell of any of claims 1 to 5 wherein the liquid flow path in the first half-cell comprises a flow guide which is located adjacent to the first electrode and comprises a spaced array of obstructions positioned to compel flow along the flow path to make a succession of changes of direction.

7. The regenerative fuel cell of any of claims 1 to 5 wherein the liquid flow path in the first half-cell extends through a porous material in which connected pores compel the flow to make a succession of changes of direction.

8. The regenerative fuel cell of any of claims 1 to 7 wherein the first electrode comprises an electrically conductive first porous layer located adjacent to the separator membrane and comprising one or more catalysts for the production and consumption of the gas.

9. The regenerative fuel cell of claim 8 wherein the first electrode is a component of an electrode assembly which also comprises an electric current carrier which is a metal sheet or mesh and an electrically conductive second porous layer which is located between the current carrier and the first porous layer and which comprises connected passages compelling flow through the second porous layer to make a succession of changes of direction.

10. The regenerative fuel cell of claim 8 wherein an electrically conductive flow guide which comprises a spaced array of obstructions is located adjacent to the first porous layer so as to compel flow of the second electrolyte liquid alongside the first porous layer to make a succession of changes of direction.

**11.** The regenerative fuel cell of any preceding claim wherein the second electrolyte liquid also contains a solute enabling the second liquid to display elastic turbulence, and the second half-cell is also configured to compel changes in the direction of flow of the second liquid through the second half-cell so as to cause elastic turbulence of the second electrolyte liquid flowing into contact with the second electrode.

**12.** The regenerative fuel cell of any preceding claim wherein the second electrolyte liquid contains a solute capable of a reversible electrochemical oxidation and reduction reaction which does not produce or consume gas as electrical power is supplied to and discharged from the fuel cell.

**13.** A method of operating the regenerative fuel cell of any preceding claim, comprising charging the cell by supply of electrical power to the electrodes and discharging the cell by taking electrical power from the electrodes while pumping the first and second liquids through the first and second half-cells, with the first liquid being in a condition of elastic turbulence while it is in contact with the first electrode, both while charging and while discharging.

**14.** The method of claim 13 wherein the second half-cell is also in a condition of elastic turbulence both while charging and while discharging.

**15.** The method of claim 13 or claim 14 wherein the gas produced in the first half-cell is hydrogen and the method comprises collecting the hydrogen produced while charging and supplying collected hydrogen to the first half-cell while discharging.

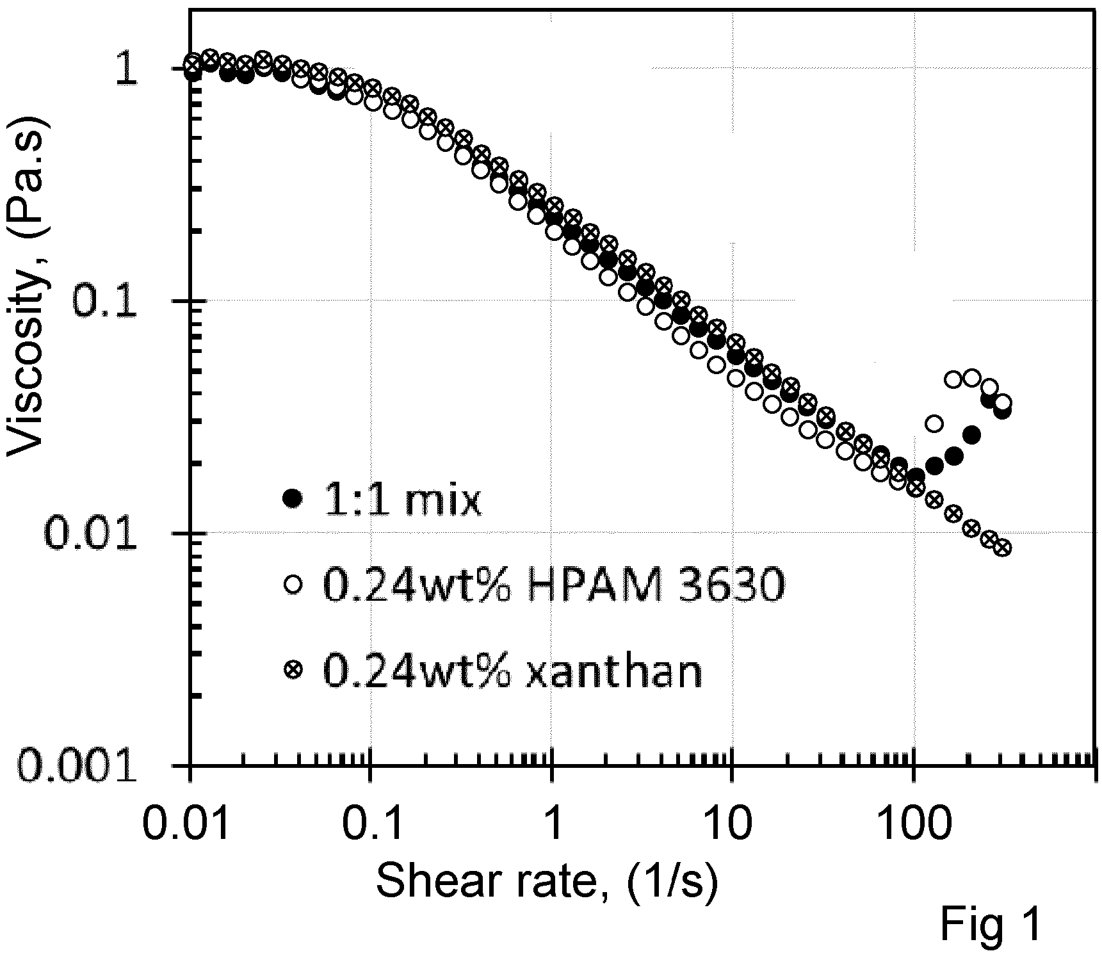
Viscosity, (Pa.s)
1
0.1
0.01
0.001
0.01
0.1
1
10
100
Shear rate, (1/s)
1:1 mix
0.24wt% HPAM 3630
0.24wt% xanthan

Fig 1

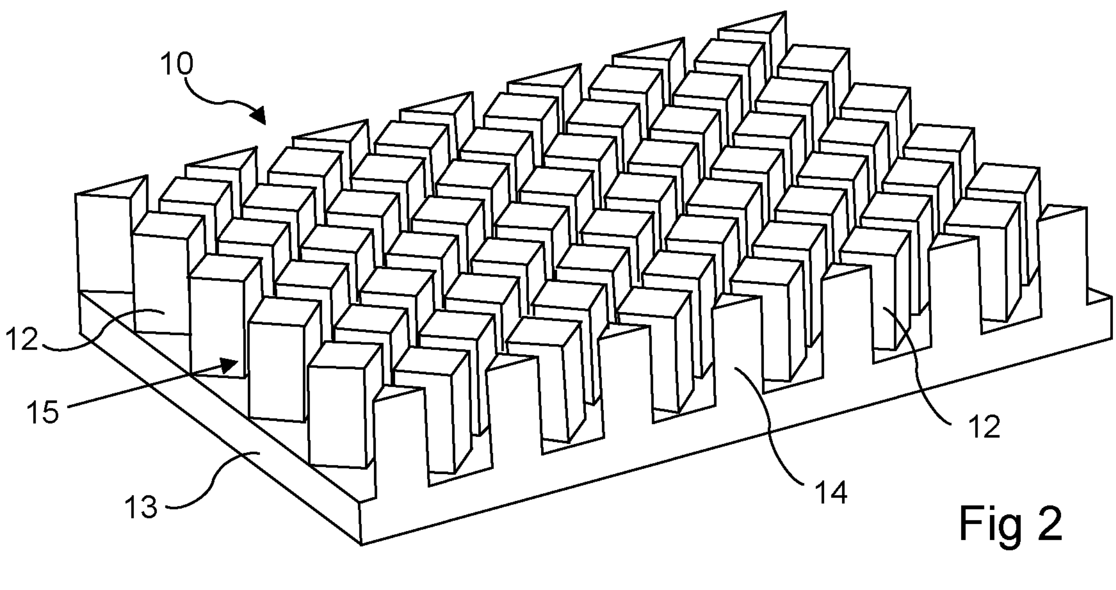
10
12
15
13
12
14

Fig 2

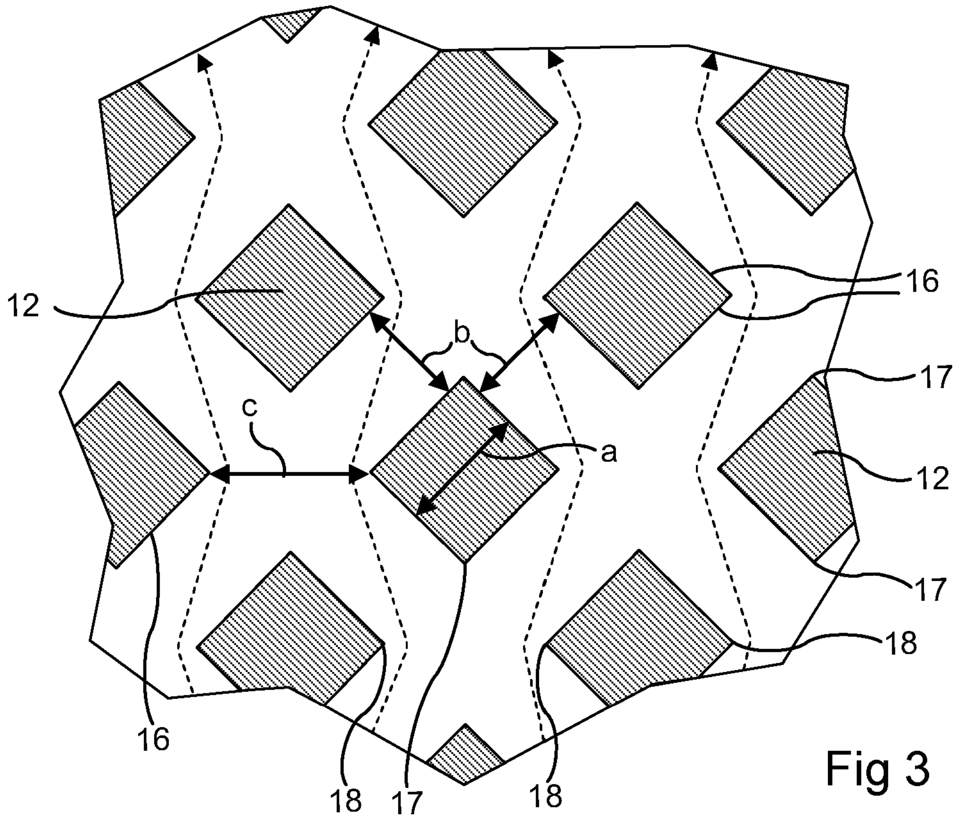


Fig 3

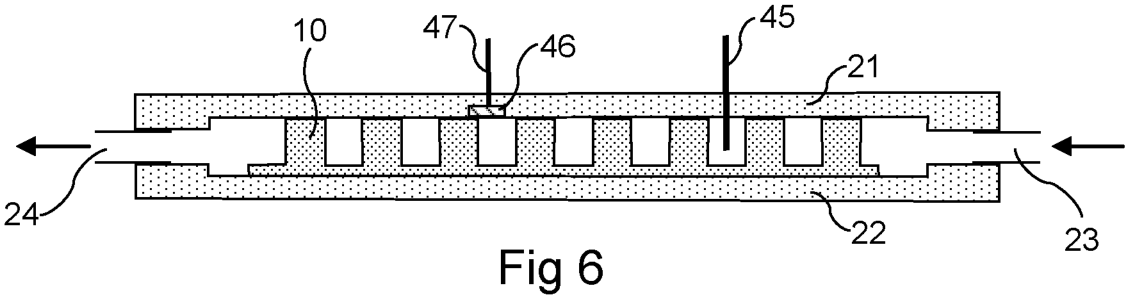


Fig 6

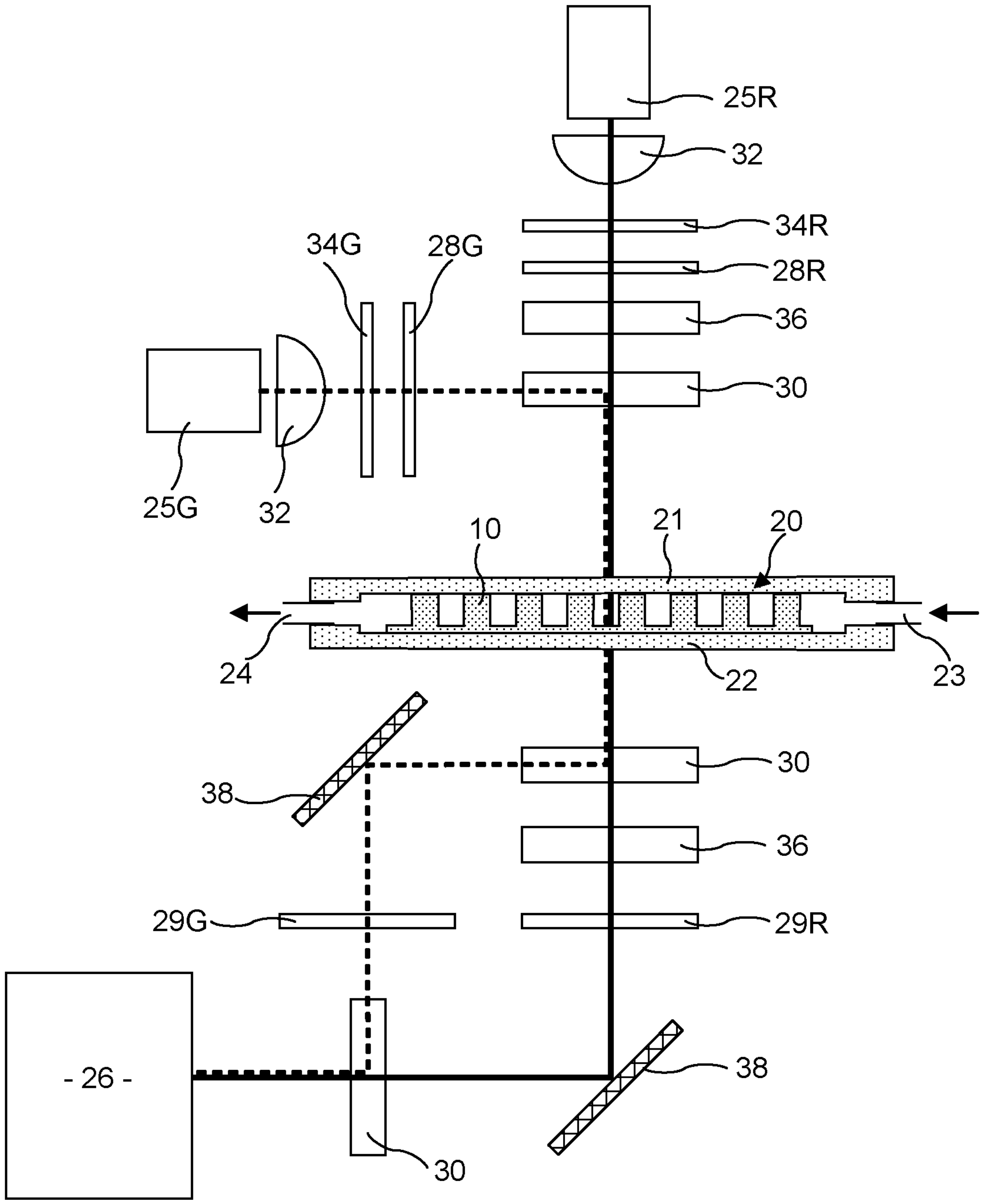
25R
32
34R
28R
36
30
34G
28G
25G
32
10
21
20
24
22
23
38
30
36
29G
29R
- 26 -
38
30

Fig 4

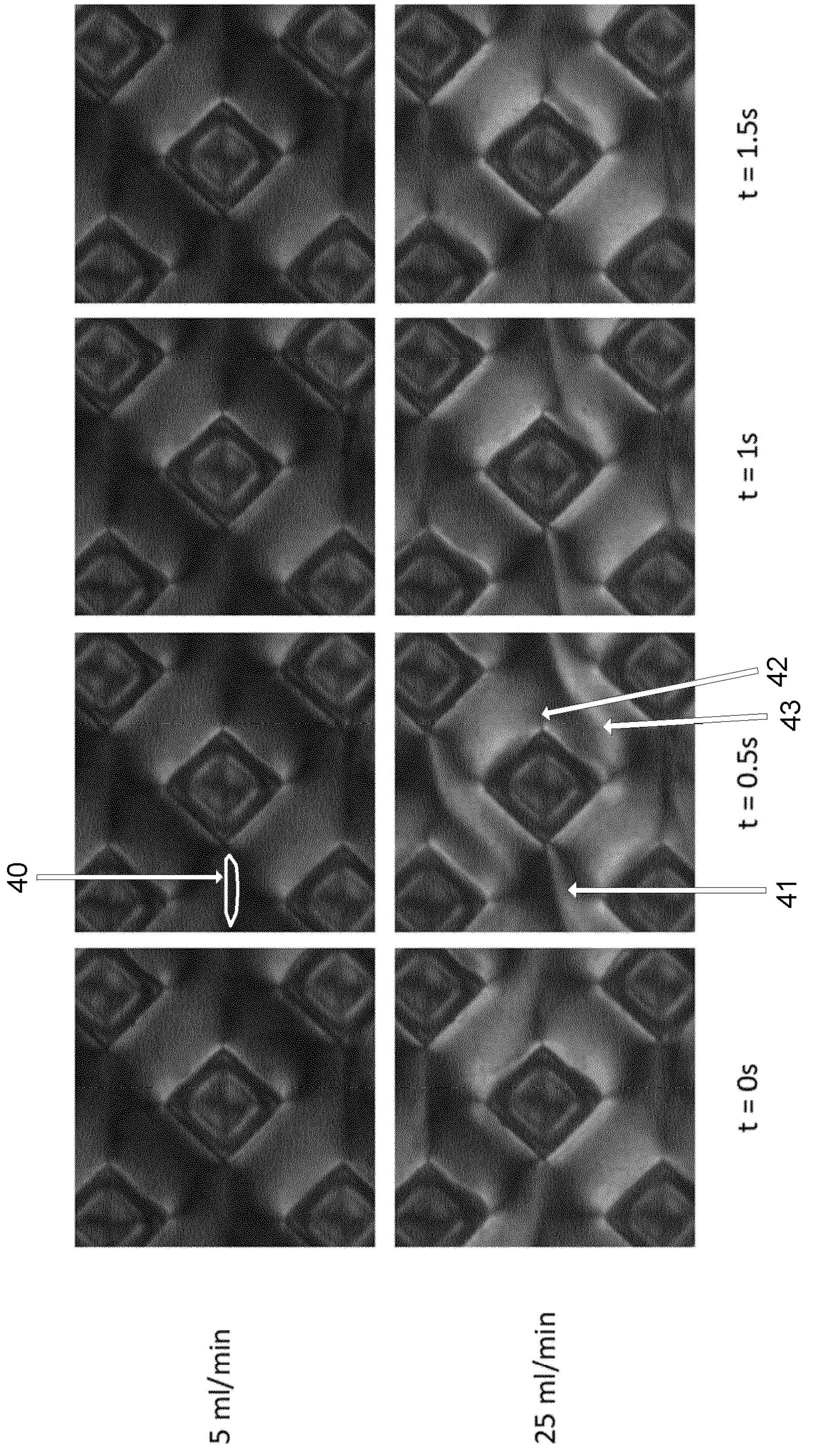


Fig 5

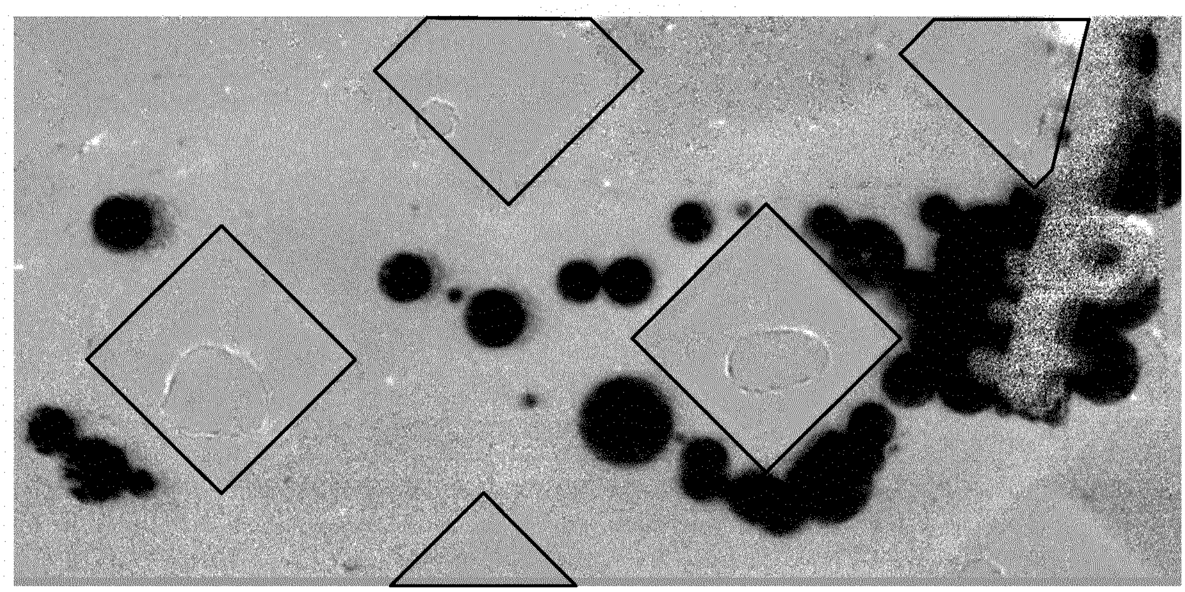

Fig 7A

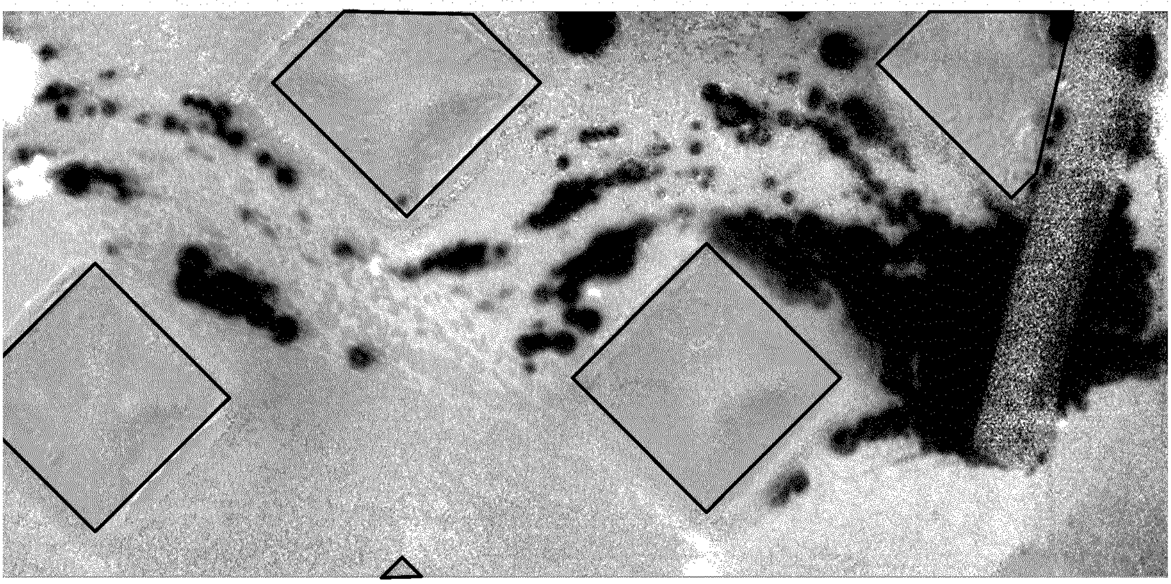

Fig 7B

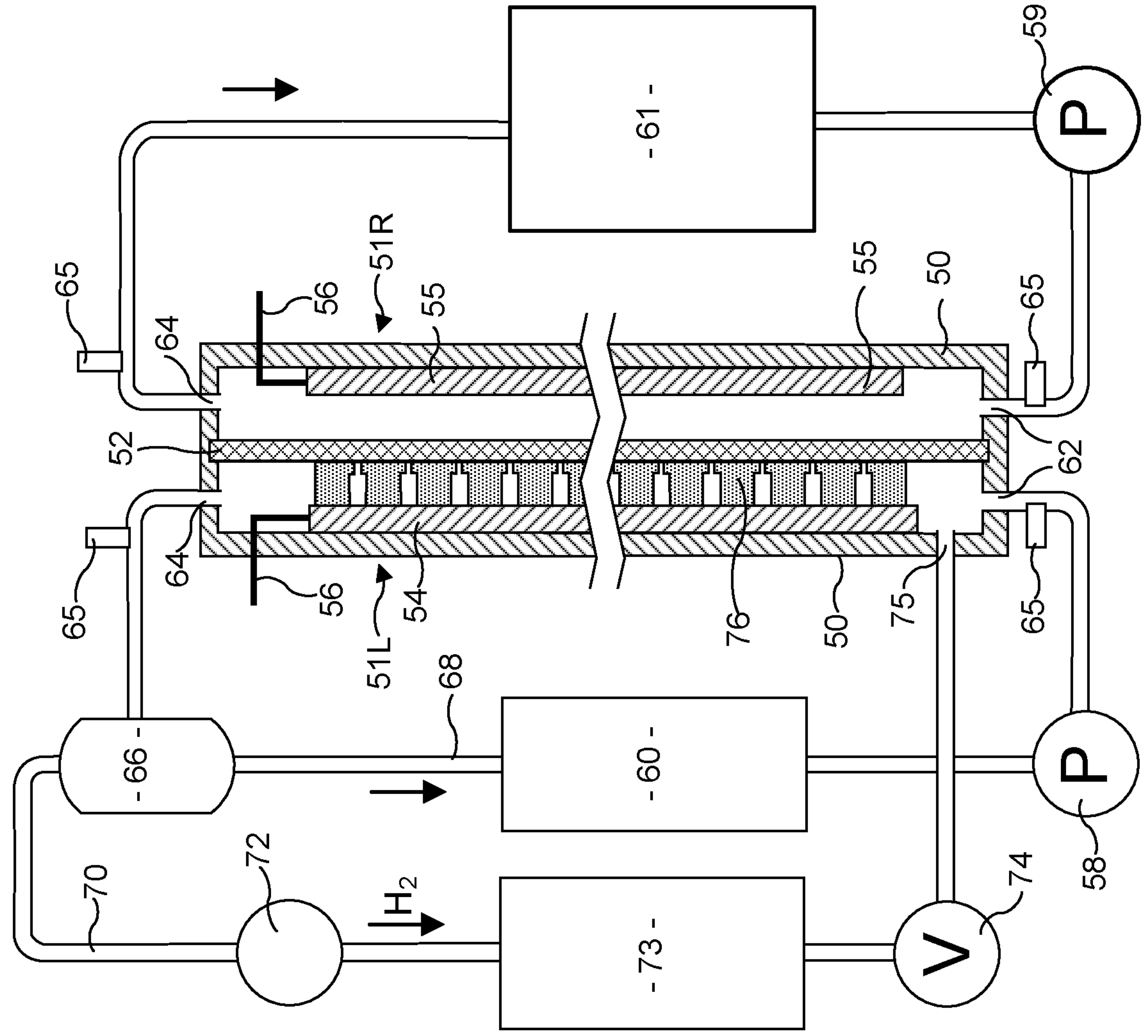


Fig 8

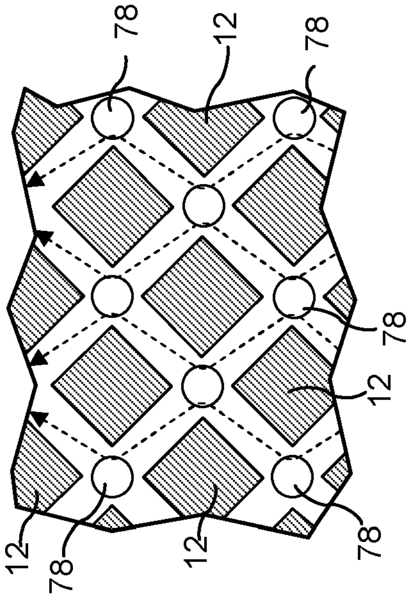


Fig 9

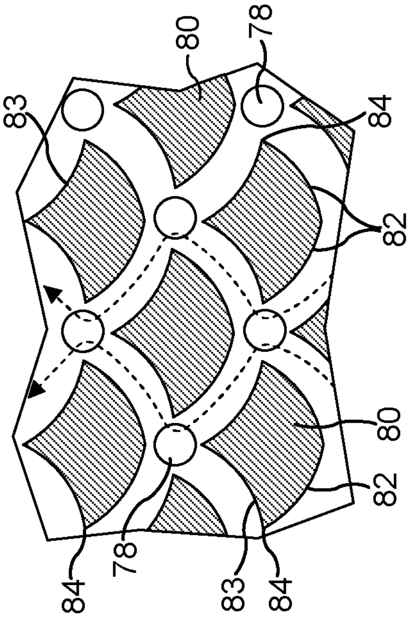


Fig 10

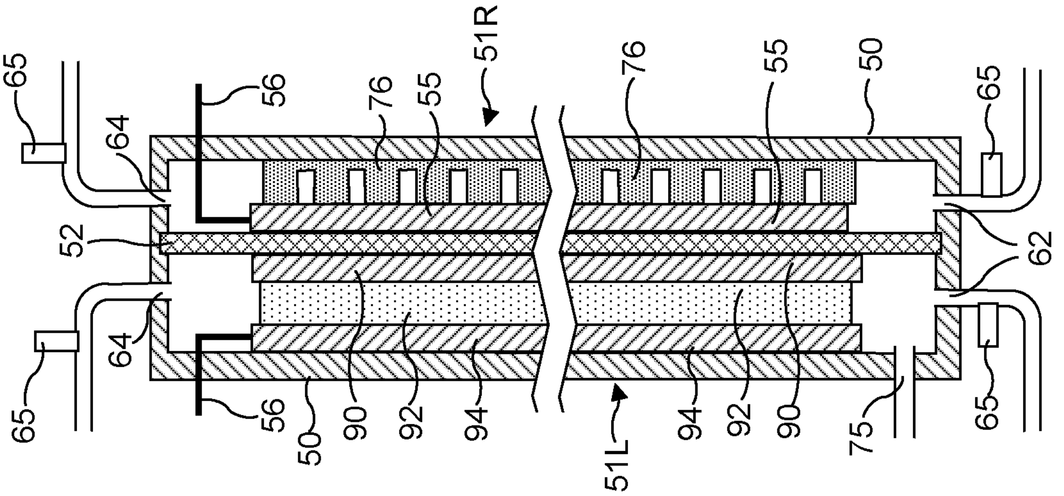


Fig 13

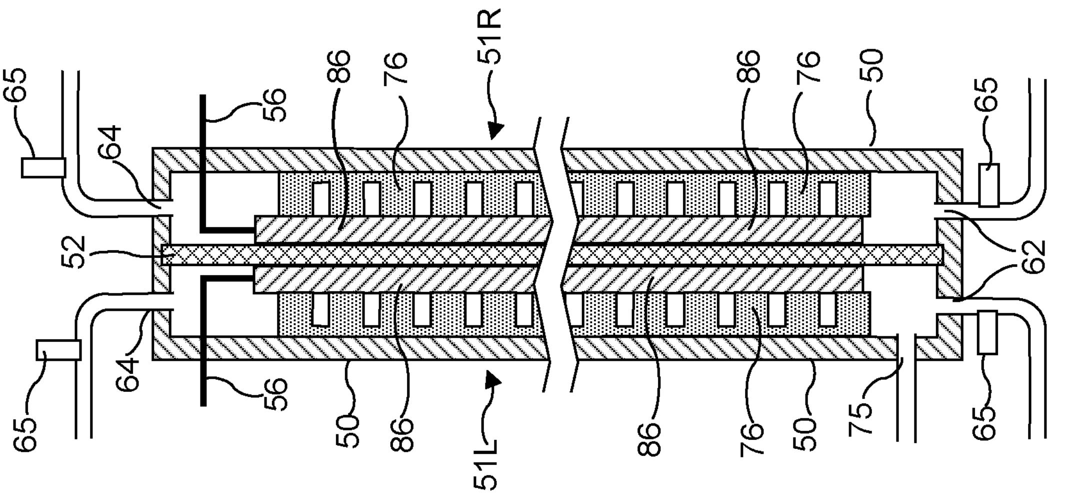


Fig 12

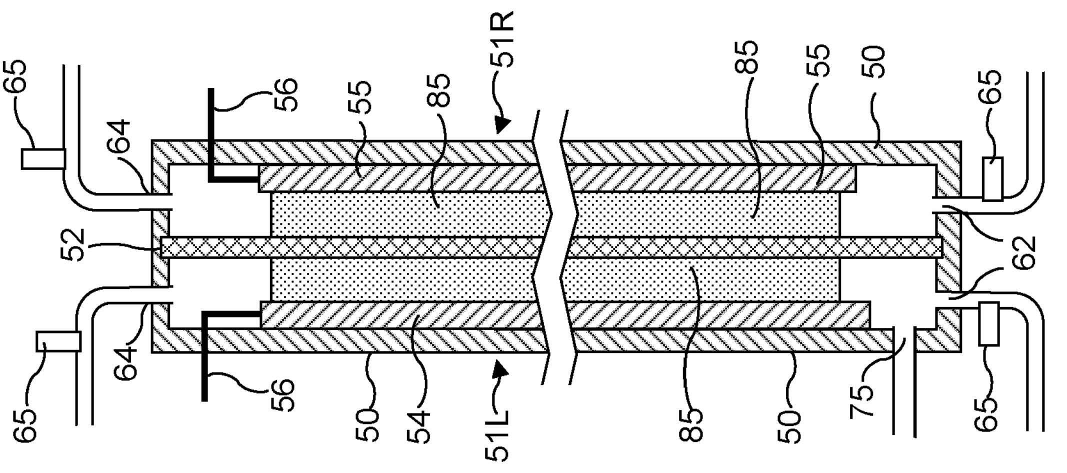


Fig 11

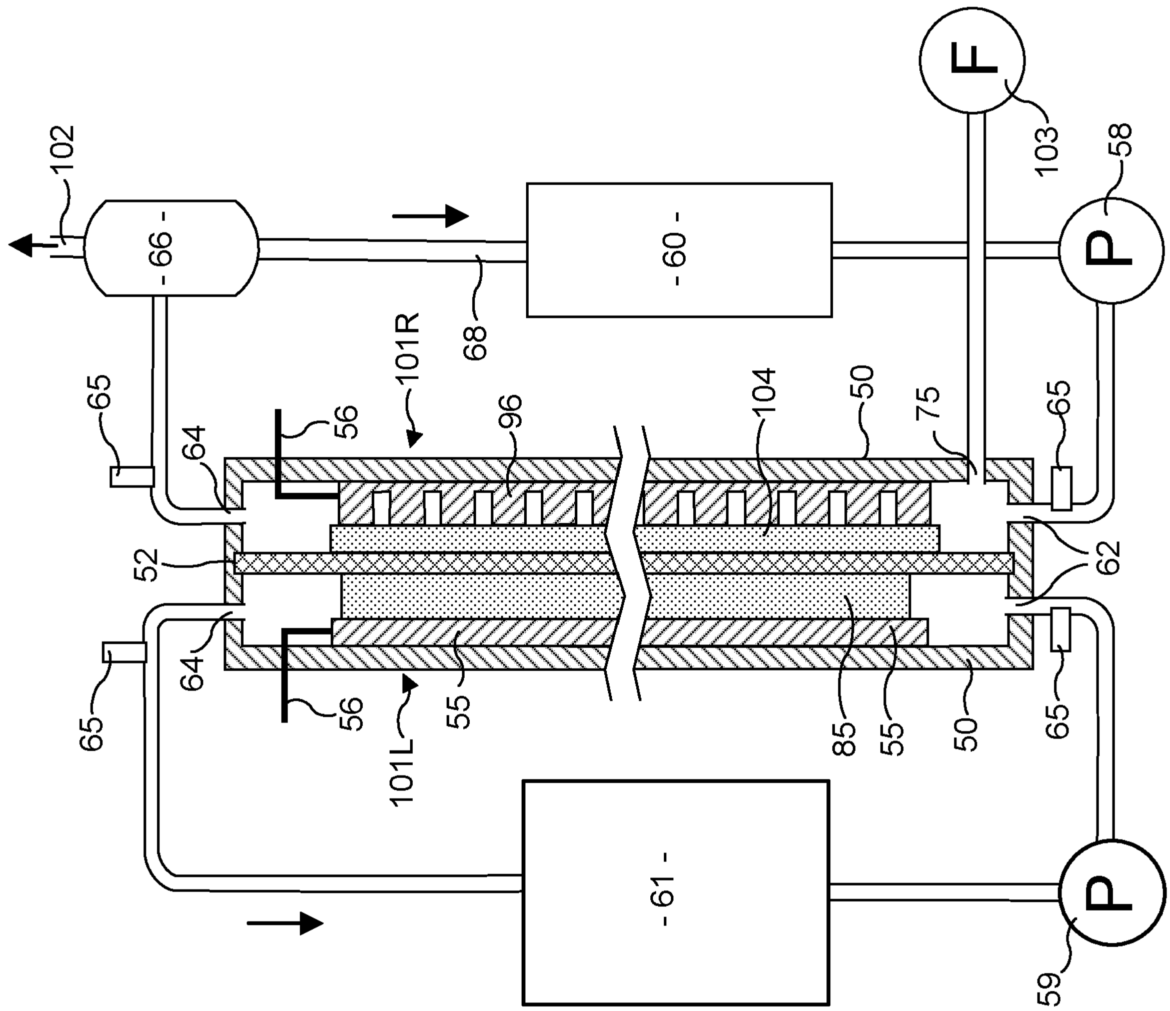

102
- 66 -
103
F
58
- 60 -
P
68
101R
65
56
96
104
50
75
65
64
52
62
64
65
56
55
101L
85
55
50
65
- 61 -
P
59


Fig 15

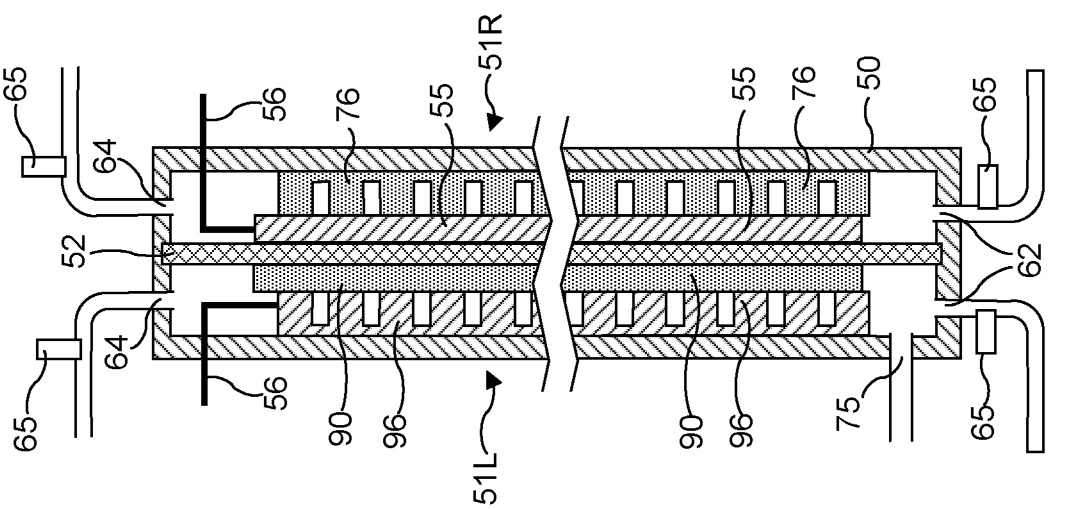

65
56
76
55
51R
55
76
50
65
64
52
62
64
65
56
90
96
51L
90
96
75
65


Fig 14

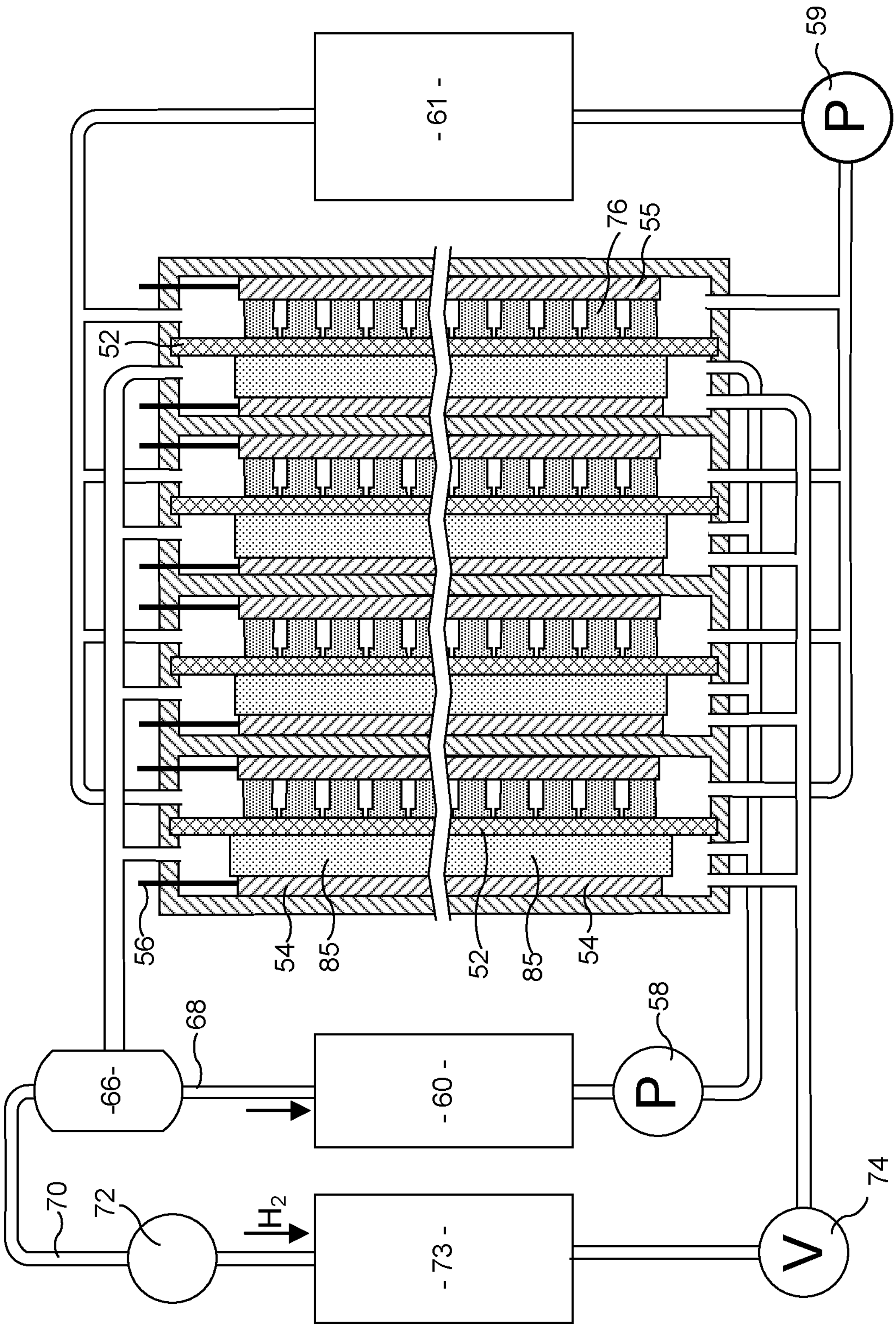


Fig 16

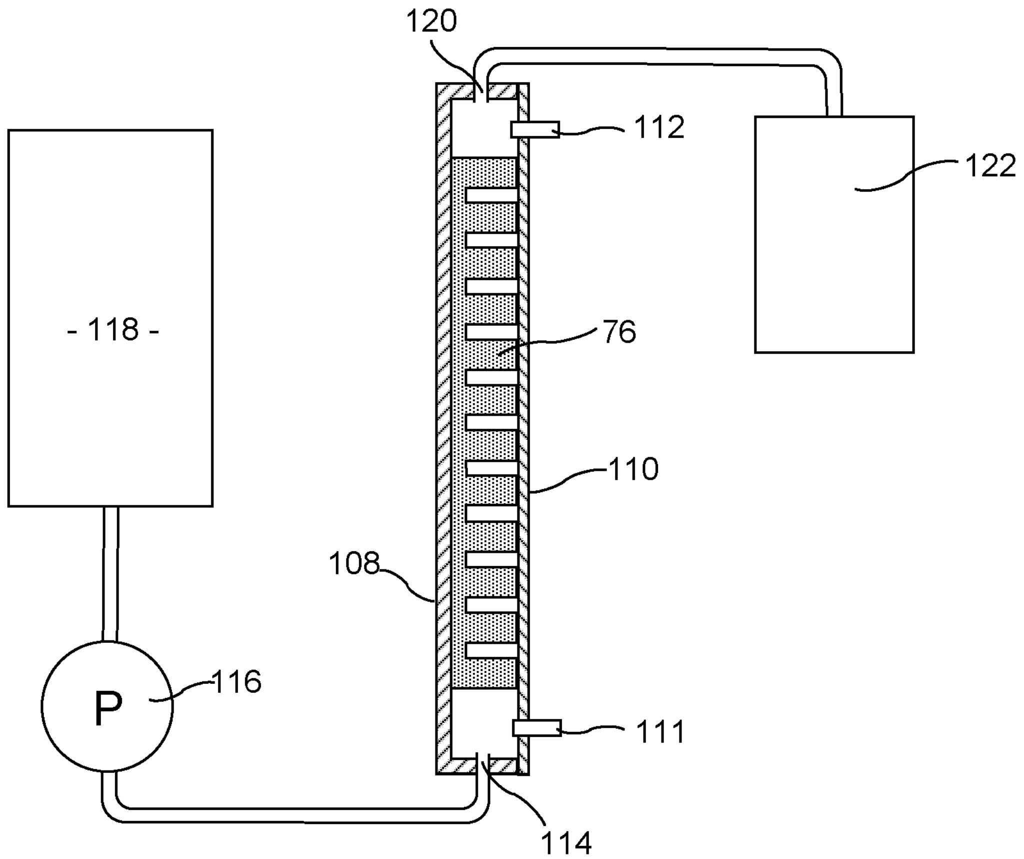


Fig 17

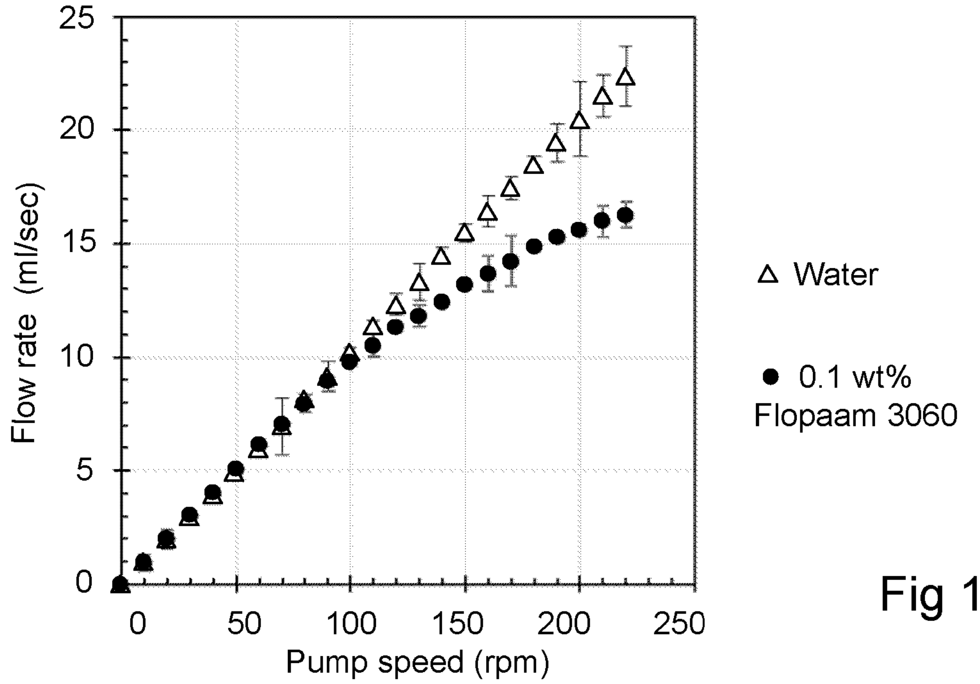
25
20
15
10
5
0
Flow rate (ml/sec)
0
50
100
150
200
250
Pump speed (rpm)
Water
0.1 wt%
Flopaam 3060

Fig 18

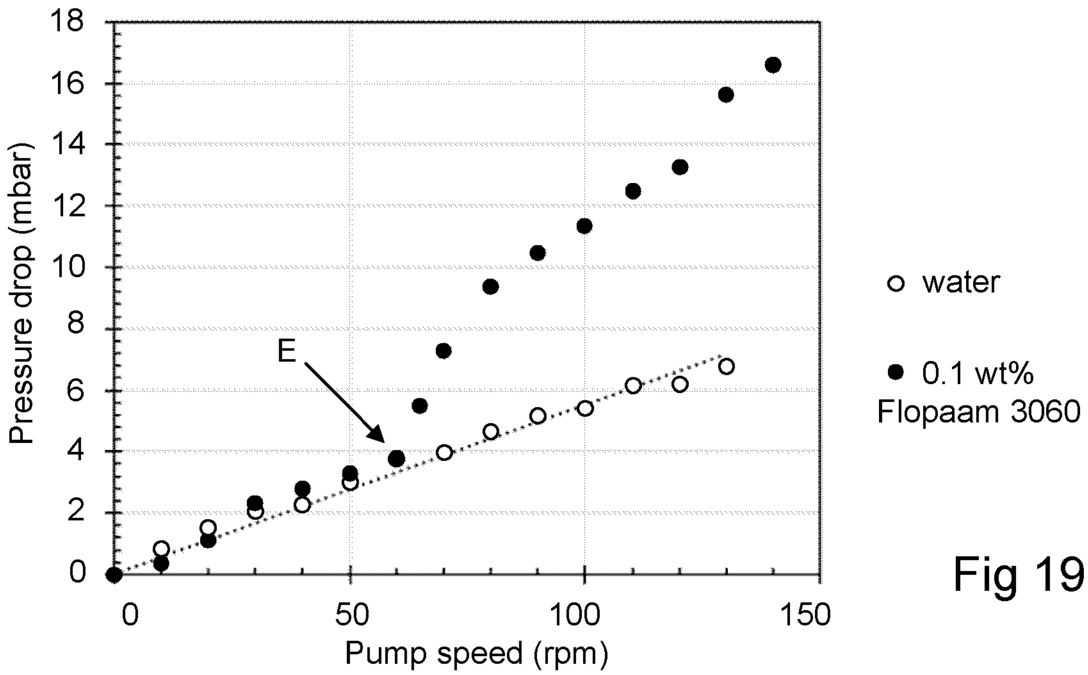
18
16
14
12
10
8
6
4
2
0
Pressure drop (mbar)
E
0
50
100
150
Pump speed (rpm)
water
0.1 wt%
Flopaam 3060

Fig 19

Europäisches Patentamt
European Patent Office
Office européen des brevets

# EUROPEAN SEARCH REPORT

Application Number
EP 25 20 2174

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2013/029187 A1 (COOPER JOHN F [US] ET AL) 31 January 2013 (2013-01-31)<br>* paragraph [0055] *<br>----- | 1-15 | INV.<br>H01M8/023<br>H01M8/0258<br>H01M8/18 |
| A | SASMAL C: "Applications of elastic instability and elastic turbulence: Review, limitations, and future directions",<br>ARXIV.ORG, CORNELL UNIVERSITY LIBRARY, 201 OLIN LIBRARY CORNELL UNIVERSITY ITHACA, NY 14853,<br>6 January 2023 (2023-01-06), XP091408734,<br>* abstract *<br>----- | 1-15 | |
| A,D | US 10 756 377 B2 (IMPERIAL INNOVATIONS LTD [GB]) 25 August 2020 (2020-08-25)<br>* claim 1 *<br>----- | 1-15 | |
| | | | TECHNICAL FIELDS SEARCHED (IPC) |
| | | | H01M |

The present search report has been drawn up for all claims

1

| Place of search | Date of completion of the search | Examiner |
|---|---|---|
| Munich | 26 January 2026 | Raimondi, Fabio |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.......................................................................
& : member of the same patent family, corresponding document

EPO FORM 1503 03.82 (P04C01)

## ANNEX TO THE EUROPEAN SEARCH REPORT ON EUROPEAN PATENT APPLICATION NO. EP 25 20 2174

This annex lists the patent family members relating to the patent documents cited in the above-mentioned European search report.
The members are as contained in the European Patent Office EDP file on
The European Patent Office is in no way liable for these particulars which are merely given for the purpose of information.

26-01-2026

| Patent document cited in search report | Publication date | Patent family member(s) | Publication date |
|---|---|---|---|
| US 2013029187 A1 | 31-01-2013 | CN 102823046 A | 12-12-2012 |
| | | CN 106159189 A | 23-11-2016 |
| | | EP 2553752 A2 | 06-02-2013 |
| | | US 2011244277 A1 | 06-10-2011 |
| | | US 2013029187 A1 | 31-01-2013 |
| | | US 2014363707 A1 | 11-12-2014 |
| | | US 2018277864 A1 | 27-09-2018 |
| | | WO 2011126908 A2 | 13-10-2011 |
| US 10756377 B2 | 25-08-2020 | CN 108475802 A | 31-08-2018 |
| | | CN 115295848 A | 04-11-2022 |
| | | EP 3391450 A1 | 24-10-2018 |
| | | ES 2899235 T3 | 10-03-2022 |
| | | JP 7231409 B2 | 01-03-2023 |
| | | JP 2018537838 A | 20-12-2018 |
| | | JP 2023025023 A | 21-02-2023 |
| | | US 2018366759 A1 | 20-12-2018 |
| | | WO 2017103578 A1 | 22-06-2017 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 3507704 A
- US 10756377 B
- US 5318865 A


### Non-patent literature cited in the description


- **SHI et al.** Energizing Fuel Cells with an Electrically Rechargeable Liquid Fuel. *Cell Reports Physical Science*, 2020, vol. 1, 100102
- **SWEIGERS et al.** *Sustainable Energy and Fuels*, 2021, vol. 5, 1280
- **STEINBERG**. *Annual Review of Fluid Mechanics*, 2021, vol. 53, 27-58
- **RUBINSTEIN** ; **COLBY**. Polymer Physics. Oxford University Press, 2003
- **GROISMAN** ; **STEINBERG**. Elastic Turbulence in a polymer solution flow. *Nature*, 2000, vol. 45, 53
- **DRIS** ; **SHAQFEH**. *J. Non-Newtonian Fluid Mech.*, 1998, vol. 80, 1-58
- **MAGDA** ; **LARSON**. *J. Non-Newtonian Fluid Mech.*, 1988, vol. 30, 1-19
- **DAVOODI et al.** *J. Fluid Mech.*, 2018, vol. 857, 823-850
- Chain Dimensions and Entanglement Spacings. **FETTERS** ; **LOHSE** ; **COLBY**. Physical Properties of Polymers Handbook. Springer, 2007, 447-454
- **YANG**. Viscoelastic wormlike micelles and their applications. *Current Opinion in Colloid & Interface Science*, 2002, vol. 7
- **RAGHAVAN** ; **KALER**. Highly Viscoelastic Wormlike Micellar Solutions Formed by Cationic Surfactants with Long Unsaturated Tails. *Langmuir*, 2001, vol. 17, 300-306
- **BEAUMONT et al.** Turbulent flows in highly elastic wormlike micelles. *Soft Matter*, 2013, vol. 9, 735
- **FARDIN et al.** Elastic Turbulence in Shear Banding Wormlike Micelles. *Physical Review Letters*, 2010, vol. 104, 178303
- **D.O. OLAGUNJU**. Instabilities and bifurcations of von Karman similarity solutions in swirling viscoelastic flow. *Z Angew Math Phys*, 1995, vol. 46, 224-238
- **E. TRAN** ; **A. CLARKE**. The relaxation time of entangled HPAM solutions in flow. *Journal of Non-Newtonian Fluid Mechanics*, 2023, vol. 311, 104954
- **MOSS GR** ; **ROTHSTEIN JP**. Flow of wormlike micelle solutions through a periodic array of cylinders. *Journal of Non-Newtonian Fluid Mechanics*, 2010, vol. 165, 1-13
- **CHEN et al.** Key Components and Design Strategy for a Proton Exchange Membrane Water Electrolyzer. *Small Structures*, 2023, vol. 4, 2200130
- **NIBLETT et al.** Review of next generation hydrogen production from offshore wind using water electrolysis. *Journal of Power Sources*, 2024, vol. 592, 233904
- **CHANG et al.** Cerium/Ascorbic Acid/Iodine Active Species for Redox Flow Energy Storage Battery. *Molecules*, 2021, vol. 26, 3443
- Hydrogen/manganese hybrid redox flow battery. *J. Phys. Energy*, 2019, vol. 1, 015006
- **CANNON et al.** Aqueous Redox Flow Batteries: Small Organic Molecules for the Positive Electrolyte Species. *ChemSusChem*, 2023, vol. 16, e202300303
- **CANNON et al.** Methylene Blue in a High-Performance Hydrogen-Organic Rechargeable Fuel Cell. *ACS Appl. Energy Mater*, 2024, vol. 7, 2080
- **HUANG et al.** Molecular engineering of dihydroxyanthraquinone-based electrolytes for high-capacity aqueous organic redox flow batteries. *Nature Communications*, 2022, vol. 13, 4746
- **HWANG et al.** Integration of Functional Groups to Enhance the Solubility and Stability of Viologen in Aqueous Organic Redox Flow Batteries. *ACS Appl. Mater. Interfaces 2024*, 2024, vol. 16, 28645